# FASCICULE DE BREVET EUROPEEN

(11) **EP 3 433 678 B1**
(45) Date de publication et mention de la délivrance du brevet: **14.10.2026**
(21) Numéro de dépôt: 17716964.6
(22) Date de dépôt: 22.03.2017
(51) Int. Cl.: G03H 1/04, G03H 1/08, G01N 21/45, G01N 15/14

(54) **PROCEDE DE CARACTERISATION HOLOGRAPHIQUE D'UNE PARTICULE DANS UN ECHANTILLON**
HOLOGRAPHISCHES VERFAHREN ZUR CHARAKTERISIERUNG EINES PARTIKELS IN EINER PROBE
HOLOGRAPHIC METHOD FOR CHARACTERISING A PARTICLE IN A SAMPLE

(30) Priorité: 23.03.2016 FR 1652501
(43) Date de publication de la demande: 30.01.2019
(73) Titulaire: Commissariat à l'Energie Atomique et aux Energies Alternatives, 75015 Paris (FR); Horiba ABX SAS, 34790 Grabels (FR); Iprasense SAS, 34830 Clapiers (FR)
(72) Inventeur: ALLIER, Cédric, 38000 Grenoble (FR); ALI CHERIF, Anais, 34090 Montpellier (FR); BLANDIN, Pierre, 38500 Coublevie (FR); ESTEBAN, Geoffrey, 34820 Teyran (FR); HERVE, Lionel, 38700 Corenc (FR); ISEBE, Damien, 34790 Grabels (FR)
(74) Mandataire: INNOV-GROUP
(86) Numéro de dépôt international: PCT/FR2017/050672
(87) Numéro de publication internationale: WO 2017/178723

(56) Documents cités:
- WO-A1-2016/024027
- WO-A1-2016/151248
- US-A1- 2014 327 944
- PATRIK LANGEHANENBERG ET AL: "Autofocusing in digital holographic microscopy", 3D RESEARCH, vol. 2, no. 1, 1 March 2011 (2011-03-01), XP055053319, DOI: 10.1007/3DRes.01(2011)4
- POHER V; ALLIER C P; COUTARD J G; HERVE L; DINTEN J M: "Lensfree in-line holographic detection of bacteria", SPIE, PO BOX 10 BELLINGHAM WA 98227-0010, USA, vol. 8086, 22 May 2011 (2011-05-22), pages 808619-1 - 808619-7, XP040561081, DOI: 10.1117/12.889324
- NING WU ET AL: "Three-Dimensional Identification of Microorganisms Using a Digital Holographic Microscope", COMPUTATIONAL AND MATHEMATICAL METHODS IN MEDICINE, vol. 220, no. 4598, 1 January 2013 (2013-01-01), pages 671 - 6, XP055327282, ISSN: 1748-670X, DOI: 10.1155/2012/101536

## Description

### DOMAINE TECHNIQUE

Le domaine technique de l'invention est lié à la caractérisation de particules présentes dans un échantillon, en particulier un échantillon biologique, par reconstruction holographique.

### ART ANTERIEUR

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon.

Cette image, également appelée hologramme, est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont parfois dénommées figures de diffraction, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes.

La demande de brevet WO2015011096 décrit un procédé permettant d'estimer l'état d'une cellule à partir d'un hologramme. Cette demande permet par exemple de discriminer des cellules vivantes de cellules mortes.

Les publications Langehanenberg P. "Autofocusing in digital holographic microscopy", 3D Research, vol. 2 n° 1 march 2011, et Poher V. "Lensfree in-line holographie detection of bacteria", SPIE vol. 8086 22 may 2011 décrivent des procédés de localisation de particules basés sur l'application d'algorithmes de focalisation numérique. La publication Ning W. "Three-dimensional identification of microorganisms using a digital holographic microscope", Computational and Mathematical Methods in Medicine, vol. 220, n° 4598, 1january 2013, décrit un proceed permettant d'identifier une particule à partir d'un filtre tridimensionnel appliqué à des images de particules reconstruites.

D'une façon générale, l'hologramme acquis par le capteur d'image peut être traité par un algorithme de reconstruction holographique, de manière à estimer des propriétés optiques de l'échantillon, par exemple un facteur de transmission ou une phase. De tels algorithmes sont bien connus dans le domaine de la reconstruction holographique. Pour cela, la distance entre l'échantillon et le capteur d'image étant connue, on applique un algorithme de propagation, prenant en compte cette distance, ainsi que la longueur d'onde de l'onde lumineuse émise par la source de lumière. On peut alors reconstituer une image d'une propriété optique de l'échantillon. L'image reconstruite peut, en particulier, être une image complexe de l'onde lumineuse transmise par l'échantillon, comportant des informations sur les propriétés optiques d'absorption ou de variation de phase de l'échantillon. Un exemple d'algorithme de reconstruction holographique est décrit dans la publication Ryle et al, « Digital in-line holography of biological specimens », Proc. Of SPIE Vol.6311 (2006).

Mais les algorithmes de reconstruction holographiques peuvent induire un bruit de reconstruction dans l'image reconstruite, désigné par le terme de « twin image ». Cela est essentiellement dû au fait que l'image formée sur le capteur d'image ne comporte pas d'information relative à la phase de l'onde lumineuse atteignant ce capteur. De ce fait, la reconstruction holographique s'effectue sur la base d'une information optique partielle, basée uniquement sur l'intensité de l'onde lumineuse collectée sur le capteur d'image. L'amélioration de la qualité de la reconstruction holographique fait l'objet de nombreux développements, en mettant en œuvre des algorithmes fréquemment dénommés « Phase retrieval », permettant une estimation de la phase de l'onde lumineuse auquel le capteur d'image est exposé.

La demande US2012/0218379 décrit par exemple un procédé permettant de reconstruire une image complexe d'un échantillon, ladite image complexe comportant des informations d'amplitude et de phase. Une telle image permet d'obtenir certaines informations permettant, l'identification d'une cellule. La demande US2012/0148141 applique le procédé décrit dans la demande US2012/0218379 pour reconstruire une image complexe de spermatozoïdes et de caractériser leur motilité, leur orientation, ou certains paramètres géométriques, par exemple la taille de leur flagelle. La demande WO2014/012031 décrit également l'application d'un procédé de reconstruction d'une image complexe de cellules, en l'occurrence des spermatozoïdes. Ce document décrit également l'acquisition d'hologrammes successifs, chaque hologramme faisant l'objet d'une reconstruction holographique afin d'obtenir un suivi tridimensionnel de la trajectoire de spermatozoïdes.

Les inventeurs ont estimé que le recours à une image complexe, obtenue par reconstruction holographique à partir d'un hologramme, ne permettait pas une caractérisation suffisante d'un échantillon, en particulier lorsque l'échantillon comporte des particules dispersées dans un milieu. L'invention permet de résoudre ce problème et permet une caractérisation précise de particules, pouvant être mise en œuvre sur la base d'une seule image acquise.

### EXPOSE DE L'INVENTION

Un objet de l'invention est un procédé de caractérisation d'une particule selon les revendications 1 à 14 et le dispositif selon la revendication 15.

### FIGURES

La figure 1 représente un exemple de dispositif selon l'invention.
La figure 2A illustre les principales étapes d'un procédé permettant le calcul d'une image complexe d'un échantillon dans un plan de reconstruction.
Les figures 2B, 2C, 2D, 2E et 2F représentent respectivement :
   - un hologramme acquis par le capteur d'image ;
   - une image reconstruite dans un plan de reconstruction lors d'une première itération du procédé représenté sur la figure 2A ;
   - une image représentant une grandeur associée à chaque pixel de l'image représentée sur la figure 2C ;
   - une représentation d'une image, dite image complexe de référence, reconstruite après plusieurs itérations du procédé représenté sur la figure 2A.
   - un profil obtenu sur la base d'images complexes secondaires formées à partir de l'image complexe de référence.

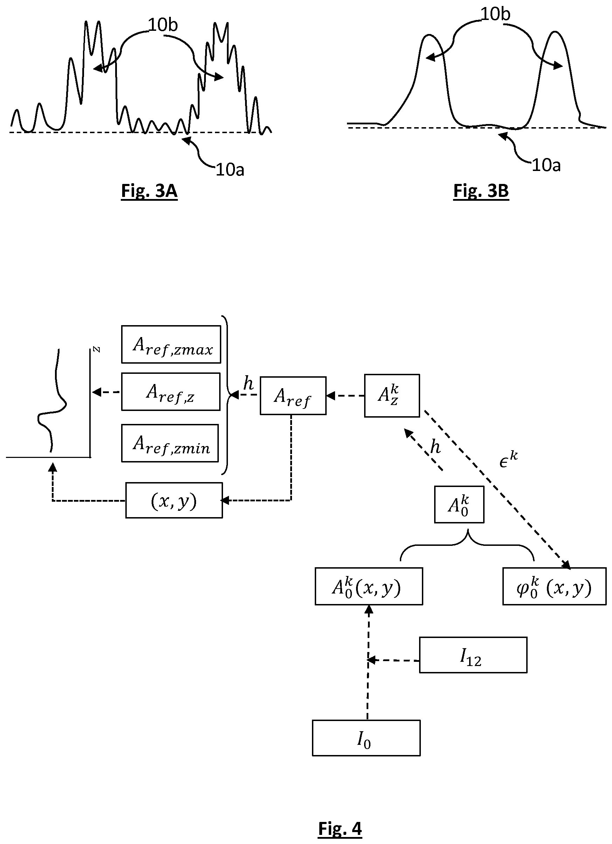

Les figures 3A et 3B schématisent un profil radial du module ou de la phase d'une image complexe obtenue par reconstruction holographique, respectivement en présence et sans bruit de reconstruction.
La figure 4 résume le fonctionnement d'un procédé mettant en œuvre l'invention.

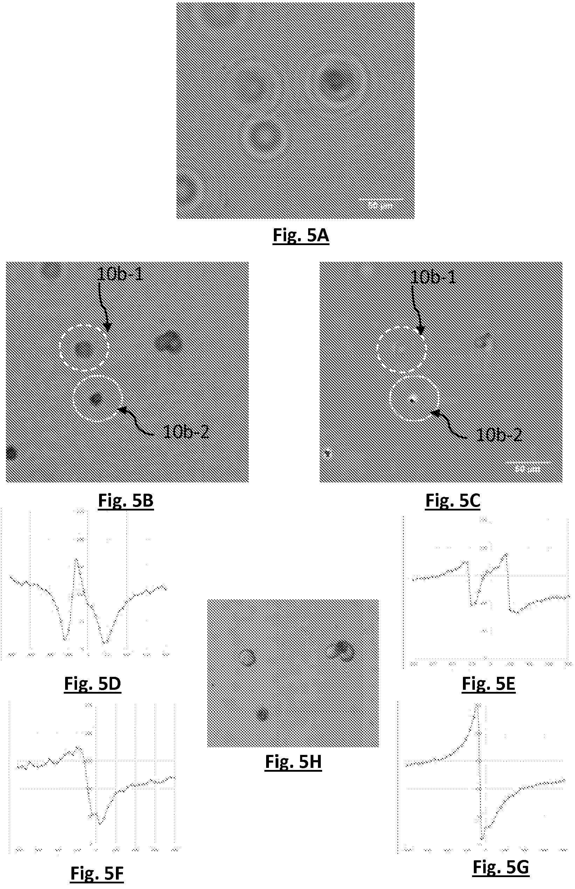

La figure 5A est un hologramme acquis par un capteur d'image, l'échantillon comportant des cellules dispersées dans une solution aqueuse. Les figures 5B et 5C représentent respectivement le module et la phase d'une image complexe, dite de référence, cette image complexe étant formée dans un plan de reconstruction. Les figures 5D et 5E sont des profils représentant respectivement une évolution du module et de la phase de l'onde lumineuse auquel le capteur d'image est exposé, le long d'un axe de propagation passant par une première cellule. Les figures 5F et 5G sont des profils représentant respectivement une évolution du module et de la phase de l'onde lumineuse auquel le capteur d'image est exposé, le long d'un axe de propagation passant par une deuxième cellule. La figure 5H est une image au microscope de l'échantillon observé.

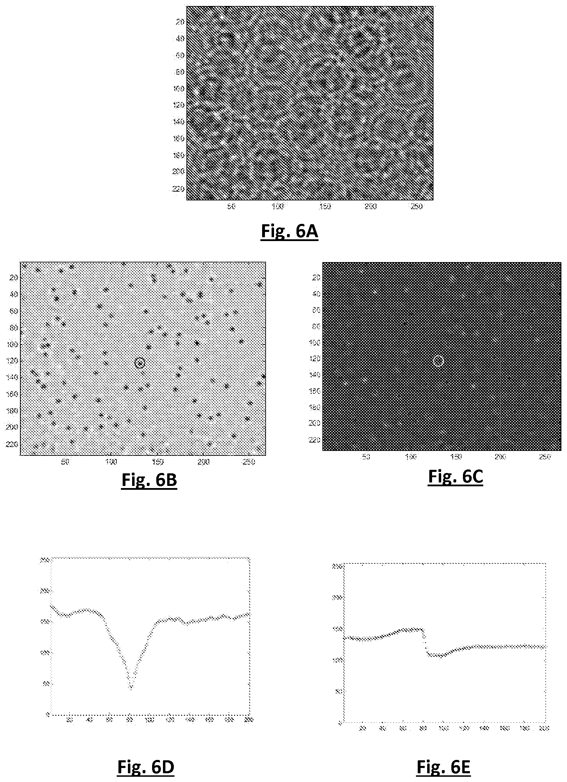

La figure 6A est un hologramme acquis par un capteur d'image, l'échantillon comportant des globules rouges dispersées dans une solution aqueuse. Les figures 6B et 6C représentent respectivement le module et la phase d'une image complexe, dite de référence, cette image complexe étant formée dans un plan de reconstruction. Les figures 6D et 6E sont des profils représentant respectivement une évolution du module et de la phase de l'onde lumineuse auquel le capteur d'image est exposé, le long d'un axe de propagation passant par un globule rouge.

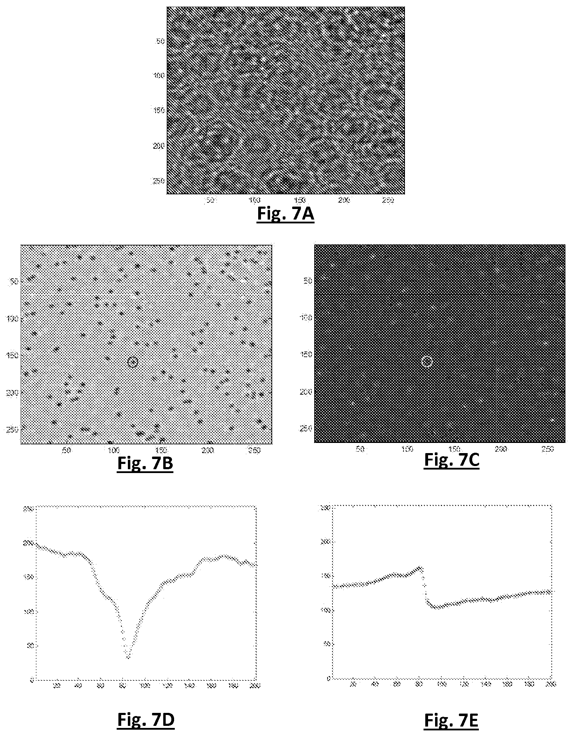

La figure 7A est un hologramme acquis par un capteur d'image, l'échantillon comportant des globules rouges dispersées dans une solution aqueuse. Les figures 7B et 7C représentent respectivement le module et la phase d'une image complexe, dite de référence, cette image complexe étant formée dans un plan de reconstruction. Les figures 7D et 7E sont des profils représentant respectivement une évolution du module et de la phase de l'onde lumineuse auquel le capteur d'image est exposé, le long d'un axe de propagation passant par un globule rouge.

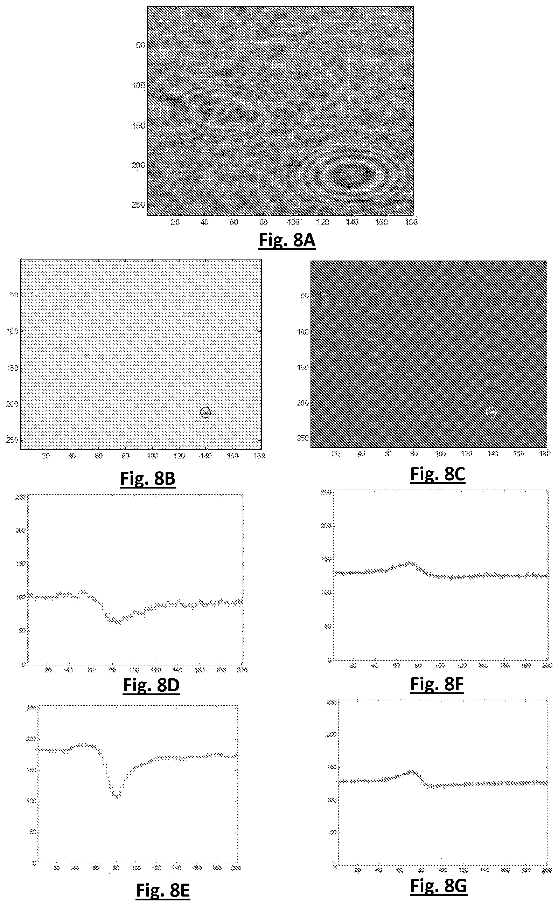

La figure 8A est un hologramme acquis par un capteur d'image, l'échantillon étant une émulsion comportant des gouttelettes d'huiles dispersées dans une solution aqueuse. Les figures 8B et 8C représentent respectivement le module et la phase d'une image complexe, dite de référence, cette image complexe étant formée dans un plan de reconstruction. Les figures 8D et 8F sont des profils représentant respectivement une évolution du module et de la phase de l'onde lumineuse auquel le capteur d'image est exposé, le long d'un axe de propagation passant par un une gouttelette, ces profils étant obtenus directement à partir d'images complexes secondaires calculées par application d'un opérateur de propagation à l'hologramme de la figure 8A. Les figures 8E et 8G sont des profils représentant respectivement une évolution du module et de la phase de l'onde lumineuse auquel le capteur d'image est exposé, le long d'un axe de propagation passant par une gouttelette, ces profils étant obtenus à partir d'images complexes secondaires calculées par application d'un opérateur de propagation à l'image complexe de référence dont le module et la phase sont représentées sur les figures 8B et 8C.

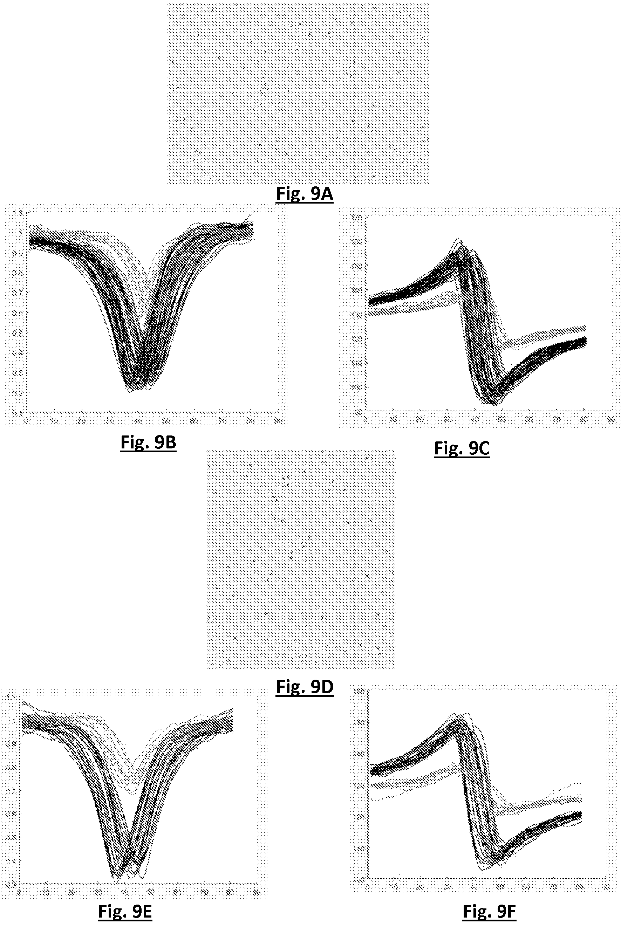

La figure 9A représente une image complexe de billes de latex de différents volumes baignant dans un liquide. Les figures 9B et 9C représentent respectivement des profils du module et de la phase de l'amplitude complexe passant par des billes représentées sur la figure 9A. La figure 9D représente une image complexe de billes de latex de différents volumes baignant dans un liquide. Les figures 9E et 9F représentent respectivement des profils du module et de la phase de l'amplitude complexe passant par des billes représentées sur la figure 9D.

### EXPOSE DE MODES DE REALISATION PARTICULIERS

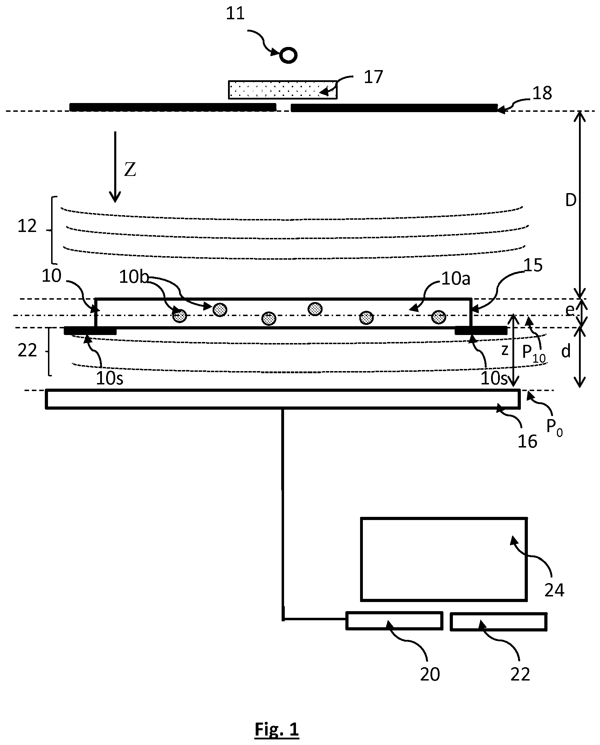

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale Δλ, comportant une longueur d'onde λ. Cette longueur d'onde peut être une longueur d'onde centrale de ladite bande spectrale.

L'échantillon 10 est un échantillon que l'on souhaite caractériser. Il peut notamment s'agir d'un milieu 10a comportant des particules 10b. Les particules 10b peuvent être des particules sanguines, par exemple des globules rouges. Il peut également s'agir de cellules, de parasites, de microorganismes, par exemple des bactéries ou des levures, des microalgues, des microbilles, ou des gouttelettes insolubles dans le milieu liquide, par exemple des nanoparticules lipidiques. Il peut également s'agir de noyaux cellulaires, d'organites ou de débris cellulaires. De préférence, les particules 10b ont un diamètre, ou sont inscrites dans un diamètre, inférieur à 1 mm, et de préférence inférieure à 100 µm. Il s'agit de microparticules (diamètre inférieur à 1 mm) ou de nanoparticules (diamètre inférieur à 1 µm). Le milieu 10a, dans lequel baignent les particules, peut être un milieu liquide, par exemple un liquide corporel, un milieu de culture ou un liquide prélevé dans l'environnement ou dans un procédé industriel. Il peut également s'agir d'un milieu solide ou ayant la consistance d'un gel, par exemple un substrat de type gélose, propice à la croissance de colonies bactériennes. Il peut également s'agir d'un échantillon évaporé, fixé ou congelé.

L'échantillon 10 est, dans cet exemple, contenu dans une chambre fluidique 15. La chambre fluidique 15 est par exemple une micro-cuvette, d'utilisation courante dans les dispositifs de type point of care, dans laquelle l'échantillon 20 pénètre, par exemple par capillarité. L'épaisseur e de l'échantillon 10, selon l'axe de propagation varie typiquement entre 10 µm et 1 cm, et est de préférence comprise entre 20 µm et 500 µm, par exemple 150 µm.

L'échantillon s'étend selon un plan *P*₁₀, dit plan de l'échantillon, perpendiculaire à l'axe de propagation. Il est maintenu sur un support 10s.

La distance D entre la source de lumière 11 et l'échantillon 10 est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 peut être une diode électroluminescente ou une diode laser. Elle peut être associée à un diaphragme 18, ou filtre spatial. L'ouverture du diaphragme est typiquement comprise entre 5 µm et 1 mm, de préférence entre 50 µm et 500 µm. Dans cet exemple, le diaphragme est fourni par Thorlabs sous la référence P150S et son diamètre est de 150 µm. Le diaphragme peut être remplacé par une fibre optique, dont une première extrémité est placée face à la source de lumière 11 et dont une deuxième extrémité est placée face à l'échantillon 10.

Le dispositif peut comporter un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire 11ᵢ, (1≤i≤3) selon un cône d'angle α. De préférence, l'angle de diffusion α varie entre 10° et 80°.

De préférence, la bande spectrale d'émission Δλ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et un capteur d'image 16. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image selon un plan de détection *P*₀. Dans l'exemple représenté, il s'agit d'un capteur d'image comportant une matrice de pixels, de type CCD ou un CMOS. Les CMOS sont les capteurs préférés car la taille des pixels est plus faible, ce qui permet d'acquérir des images dont la résolution spatiale est plus favorable. Le plan de détection *P*₀ s'étend de préférence perpendiculairement à l'axe de propagation Z de l'onde lumineuse incidente 12.

La distance d entre l'échantillon 10 et la matrice de pixels du capteur d'image 16 est préférentiellement comprise entre 50 µm et 2 cm, de préférence comprise entre 100 µm et 2 mm.

On remarque l'absence d'optique de grossissement entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image.

Sous l'effet de l'onde lumineuse incidente 12, l'échantillon 10 peut engendrer une onde diffractée, susceptible de produire, au niveau du plan de détection *P*₀, des interférences, en particulier avec une partie de l'onde lumineuse incidente 12 transmise par l'échantillon. Par ailleurs, l'échantillon peut absorber une partie de l'onde lumineuse incidente 12. Ainsi, l'onde lumineuse 22, transmise par l'échantillon, et à laquelle est exposé le capteur d'image 20, peut comprendre :
- une composante résultant de la diffraction de l'onde lumineuse incidente 12 par l'échantillon ;
- une composante résultant de l'absorption de l'onde lumineuse incidente 12 par l'échantillon. Cette composante correspond à une partie de l'onde lumineuse incidente 12 non absorbée par l'échantillon.

L'onde lumineuse 22 peut aussi être désignée par le terme "onde lumineuse d'exposition". Un processeur 20, par exemple un microprocesseur, est apte à traiter chaque image acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Une image acquise sur le capteur d'image 16, également appelée hologramme, ne permet pas d'obtenir une représentation suffisamment précise de l'échantillon observé. Comme décrit en lien avec l'art antérieur, on peut appliquer, à chaque image acquise par le capteur d'image, un opérateur de propagation h, de façon à calculer une grandeur représentative de l'onde lumineuse 22 transmise par l'échantillon 10, et à laquelle est exposé le capteur d'image 16. Un tel procédé, désigné par le terme reconstruction holographique, permet notamment de reconstruire une image du module ou de la phase de cette onde lumineuse 22 dans un plan de reconstruction parallèle au plan de détection *P*₀, et notamment dans le plan *P*₁₀ selon lequel s'étend l'échantillon. Pour cela, on effectue un produit de convolution de l'image *I*₀ acquise par le capteur d'image 16 par un opérateur de propagation h. Il est alors possible de reconstruire une expression complexe A de l'onde lumineuse 22 en tout point de coordonnées (*x, y,* z) de l'espace, et en particulier dans un plan de reconstruction *P_{z}* situé à une distance |*z*| du capteur d'image 16, ce plan de reconstruction pouvant être le plan de l'échantillon *P*₁₀. L'expression complexe A est une grandeur complexe dont l'argument et le module sont respectivement représentatifs de la phase et de l'intensité de l'onde lumineuse 22 à laquelle est exposé le capteur d'image 16. Le produit de convolution de l'image *I*₀ par l'opérateur de propagation h permet d'obtenir une image complexe *A_{z}* représentant une distribution spatiale de l'expression complexe A dans un plan, dit plan de reconstruction *P_{z}*, s'étendant à une coordonnée z du plan de détection *P*₀. Dans cet exemple, le plan de détection *P*₀ a pour équation z = 0. Cette image complexe correspond à une image complexe de l'échantillon dans le plan de reconstruction *P_{z}*. Elle représente également une distribution spatiale bidimensionnelle des propriétés optiques de l'onde 22 à laquelle est exposée le capteur d'image 16.

L'opérateur de propagation h a pour fonction de décrire la propagation de la lumière entre le capteur d'image 16 et un point de coordonnées (*x, y, z*)*,* situé à une distance |*z*| de ce dernier. Il est alors possible de déterminer le module *M*(*x, y, z*) et/ou la phase φ (x,y,z) l'onde lumineuse 22, à cette distance |*z*|, dite distance de reconstruction, avec :
- $M \left(x, y, z\right) = abs \left[A\left(x, y, z\right)\right]$ (1)
- $φ \left(x, y, z\right) = arg \left[A\left(x, y, z\right)\right]$ (2)

Les opérateurs *abs* et *arg* désignent respectivement le module et l'argument.

Autrement dit, l'expression complexe *A* de l'onde lumineuse 22 en tout point de coordonnées (*x, y,* z) de l'espace est telle que : $A \left(x, y, z\right) = M \left(x, y, z\right) {e}^{jφ \left(x, y, z\right)}$ (3)

L'obtention d'une image complexe *A_{z}* de l'échantillon par application d'un opérateur de propagation à un hologramme est connue de l'art antérieur, en particulier à des fins de caractérisation de particules, comme en témoignent les références indiquées en lien avec l'art antérieur.

Cependant, les inventeurs ont estimé qu'une image complexe de l'échantillon, comportant des particules, ne permettait pas d'effectuer une caractérisation suffisamment fiable desdites particules. Un point important de l'invention est de caractériser une particule non pas par une image complexe, mais par un profil d'une caractéristique optique de l'onde lumineuse 22 le long de son axe de propagation Z. Par profil, on entend une évolution d'une grandeur le long d'un axe, et en particulier le long de l'axe de propagation, auquel cas on parle de profil selon l'axe Z. La caractéristique optique peut être une phase, une amplitude, ou une combinaison d'une phase et d'une amplitude. D'une façon générale, une caractéristique optique est obtenue à partir de l'expression complexe *A* telle que précédemment défini.

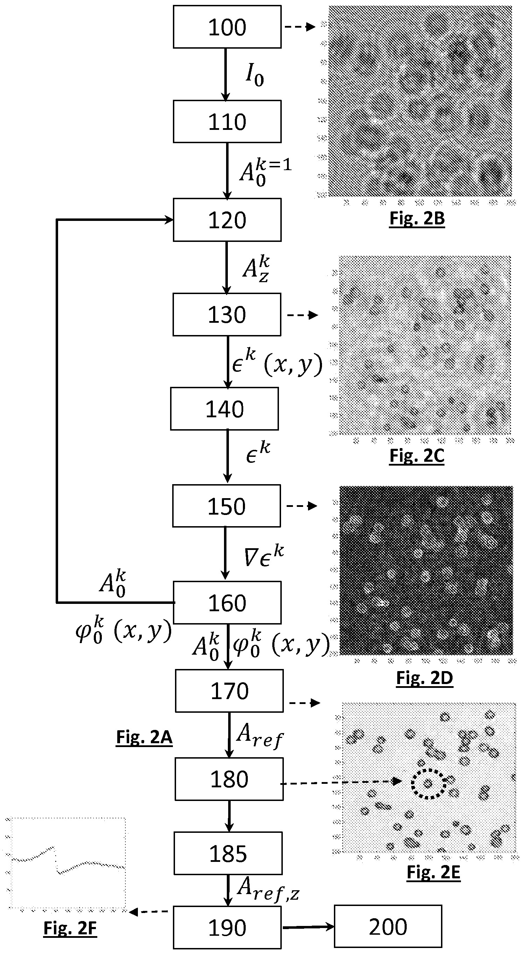

Cependant, une telle reconstruction peut s'accompagner d'un bruit de reconstruction pouvant être important, du fait que la propagation est réalisée sur la base d'un hologramme *I*₀ ne comportant pas d'information relative à la phase. Aussi, préalablement à l'établissement du profil, il est préférable de disposer d'une information relative à la phase de l'onde lumineuse 22 à laquelle est exposé le capteur d'image 16. Cette information relative à la phase peut être obtenue en reconstruisant une image complexe *A_{z}* de l'échantillon 10, selon des méthodes décrites dans l'art antérieur, de façon à obtenir une estimation de l'amplitude et de la phase de l'onde lumineuse 22 au niveau du plan *P*₀ du capteur d'image ou dans un plan de reconstruction *P_{z}* situé à une distance |*z*| de ce dernier. Cependant, les inventeurs ont mis au point un procédé basé sur le calcul d'une image complexe de référence, décrit en lien avec la figure 2A. Ce procédé comprend les étapes suivantes :
- Acquisition d'une image *I*₀ par le capteur d'image 16, cette image formant l'hologramme (étape 100).
- Calcul d'une image complexe, dite de référence, *A_{ref}* de l'échantillon 10 dans un plan de reconstruction *P_{z}* ou dans le plan de détection *P*₀, cette image complexe de référence comportant des informations de phase et d'amplitude de l'onde lumineuse 22 à laquelle est exposé le capteur d'image 16 ; cette étape est effectuée en appliquant l'opérateur de propagation h, précédemment décrit, à l'image acquise *I*₀ (étapes 110 à 170). Cette image est désignée comme étant une image de référence car elle sert de base à la formation du profil sur la base duquel la particule est caractérisée.
- Sélection d'une position radiale (*x, y*) d'une particule dans le plan de détection (étape 180), soit en utilisant l'image complexe de référence, soit l'hologramme.
- Application de l'opérateur de propagation *h* à l'image complexe de référence *A_{ref}* de façon à calculer des images complexes *A_{ref,z}*, dites secondaires, le long de l'axe de propagation Z (étape 185).
- A partir de chaque image complexe secondaire *A_{ref,z},* estimation d'une grandeur caractéristique de l'onde lumineuse 22, à la position radiale (*x, y*) de la particule préalablement sélectionnée, et à une pluralité de distances du plan de reconstruction (ou du plan de détection), puis formation d'un profil représentant une évolution de ladite grandeur caractéristique selon l'axe de propagation Z (étape 190).
- Caractérisation de la particule en fonction de ce profil. Cette caractérisation peut être effectuée par une comparaison du profil obtenu avec des profils étalons obtenus lors d'une phase de calibration, à l'aide d'échantillons étalons. La caractérisation peut être basée sur une métrique permettant une comparaison entre le profil obtenu et les profils étalons, ou une classification du profil obtenu selon des classes associées à des profils étalons (étape 200).

L'algorithme présenté sur la figure 2A est détaillé ci-dessous, les résultats obtenus au cours de certaines étapes étant illustrés sur les figures 2B à 2F. Les étapes 110 à 170 constituent une façon préférée d'obtenir une image complexe de référence, notée *A_{ref},* cette image représentant une distribution spatiale de l'expression complexe de l'onde 22 dans un plan de reconstruction *P_{z}*. L'homme du métier comprendra que d'autres algorithmes permettant de reconstruire une telle image complexe, et par exemple les algorithmes cités en lien avec l'art antérieur, sont également envisageables, par exemple les algorithmes décrits dans US2012/0218379 pages 10 à 12.

### Etape 100 : acquisition d'image

Au cours de cette étape, le capteur d'image 16 acquiert une image *I*₀ de l'échantillon 16, et plus précisément de l'onde lumineuse 22 transmise par ce dernier, à laquelle est exposé le capteur d'image. Une telle image, ou hologramme, est représentée sur la figure 2B.

Cette image a été réalisée en utilisant un échantillon 10 comportant de cellules CHO (cellules ovariennes de hamster) baignant dans un tampon salin, l'échantillon étant contenu dans une chambre fluidique d'épaisseur 100 µm disposé à une distance d de 1500 µm d'un capteur CMOS. L'échantillon a été illuminé par une diode électroluminescente 11 dont la bande spectrale d'émission est centrée sur une longueur d'onde de 450 nm et située à une distance D=8 cm de l'échantillon.

### Etape 110 : initialisation

Au cours de cette étape, on définit une image initiale ${A}_{0}^{k = 0}$ de l'échantillon, à partir de l'image *I*₀ acquise par le capteur d'image 16. Cette étape est une initialisation de l'algorithme itératif décrit ci-après en lien avec les étapes 120 à 180, l'exposant k désignant le rang de chaque itération. Le module ${M}_{0}^{k = 0}$ de l'image initiale ${A}_{0}^{k = 0}$ peut-être obtenu en appliquant l'opérateur racine carrée à l'image acquise *I*₀ par le capteur d'image, auquel cas ${M}_{0}^{k = 0} = \sqrt{{I}_{0}}$. Il peut également être obtenu par une normalisation de l'image *I*₀ par un terme représentatif de l'intensité de l'onde lumineuse 12 incidente à l'échantillon 16. Ce dernier peut être :
- la racine carrée d'une moyenne *̅I̅*̅₀̅ de l'image *I*₀, auquel cas chaque pixel *I*₀(*x, y*) de l'image acquise est divisé par ladite moyenne, de telle sorte que ${M}_{0}^{k = 0} = \sqrt{\frac{{I}_{0} \left(x, y\right)}{\overline{{I}_{0}}}}$ (4)
- une image sans échantillon *I*₁₂ acquise par le capteur d'image 16 en l'absence d'échantillon entre la source de lumière 11 et le capteur d'image, auquel cas la valeur de chaque pixel *I*₀(*x, y*) de l'image acquise de l'échantillon est divisée par la valeur de chaque pixel *I*₁₂(*x, y*) de l'image sans échantillon : ${M}_{0}^{k = 0} = \sqrt{\frac{{I}_{0} \left(x, y\right)}{{I}_{12} \left(x, y\right)}}$ (4')
- une moyenne *̅I̅*̅₁̅₂̅ de ladite image sans échantillon, auquel cas chaque pixel *I*₀(*x, y*) de l'image acquise est divisé par ladite moyenne : ${M}_{0}^{k = 0} = \sqrt{\frac{{I}_{0} \left(x, y\right)}{\overline{{I}_{12}}}}$ (4'')

La phase ${φ}_{0}^{k = 0}$ de l'image initiale ${A}_{0}^{k = 0}$ est soit considérée comme nulle en chaque pixel (x, y), soit prédéterminée selon une valeur arbitraire. En effet, l'image initiale ${A}_{0}^{k = 0}$ résulte directement de l'image *I*₀ acquise par le capteur d'image 16. Or, cette dernière ne comporte pas d'information relative à la phase de l'onde lumineuse 22 transmise par l'échantillon 10, le capteur d'image 16 n'étant sensible qu'à l'intensité de cette onde lumineuse.

### Etape 120 : propagation

Au cours de cette étape, l'image ${A}_{0}^{k - 1}$ obtenue dans le plan de l'échantillon est propagée dans un plan de reconstruction *P_{z}*, par l'application d'un opérateur de propagation tel que précédemment décrit, de façon à obtenir une image complexe ${A}_{z}^{k}$, représentative de l'échantillon, dans le plan de reconstruction *P_{z}*. Le terme image complexe désigne le fait que chaque terme de cette image est une grandeur complexe. La propagation est réalisée par convolution de l'image ${A}_{0}^{k - 1}$ par l'opérateur de propagation *h*_{-*z*}, de telle sorte que : ${A}_{z}^{k} = {A}_{0}^{k - 1} ∗ {h}_{- z}$ (5), le symbole * désignant un produit de convolution. L'indice - *z* représente le fait que la propagation est réalisée dans un sens opposé à l'axe de propagation Z. On parle de rétro-propagation.

L'opérateur de propagation est par exemple la fonction de Fresnel-Helmholtz, telle que : $h \left(x, y, z\right) = \frac{1}{jλz} {e}^{j 2 π \frac{z}{λ}} exp \left(jπ\frac{{x}^{2} + {y}^{2}}{λz}\right)$ (6)

La convolution est généralement réalisée dans le domaine fréquentiel, ou elle se ramène à un produit, auquel cas on utilise la transformée de Fourier de cet opérateur, cette dernière étant : $H \left(μ, ν, z\right) = {e}^{j 2 π \frac{z}{λ}} exp \left(-λz\left({μ}^{2}+{ν}^{2}\right)\right)$ (6') où λ désigne la longueur d'onde centrale de la bande spectrale d'émission de la source de lumière 11. $Ainsi , {A}_{z}^{k} \left(x, y\right) = {A}_{z}^{k} \left(r\right) = - \frac{1}{jλz} {e}^{- j 2 π \frac{z}{λ}} ∬ {A}_{0}^{k - 1} \left(r′\right) exp - \left(jπ\frac{{\left(r-r′\right)}^{2}}{λz}\right) dr ′$ (7) où r et r' désignent respectivement des coordonnées radiales, c'est-à-dire dans le plan de reconstruction *P_{z}* et dans le plan de détection *P*₀.

Lors de la première itération (*k* =1), ${A}_{0}^{k = 0}$ est l'image initiale déterminée lors de l'étape 110. Au cours des itérations suivantes, ${A}_{0}^{k - 1}$ est l'image complexe dans le plan de détection *P*₀ mise à jour au cours de l'itération précédente.

Le plan de reconstruction *P_{z}* est un plan distant du plan de détection *P*₀, et de préférence parallèle à ce dernier. De préférence, le plan de reconstruction *P_{z}* est un plan *P*₁₀ selon lequel s'étend l'échantillon 10. En effet, une image reconstruite dans ce plan permet d'obtenir une résolution spatiale généralement élevée. Il peut également s'agir d'un autre plan, situé une distance non nulle du plan de détection, et de préférence parallèle à ce dernier, par exemple un plan s'étendant entre le capteur d'image 16 et l'échantillon 10.

La figure 2C représente une le module d'une image ${A}_{z}^{k = 1}$ reconstruite à une distance de 1440 µm du plan de détection *P*₀ en appliquant l'opérateur de propagation défini ci-dessus à l'hologramme de la figure 2B. Cette image représente l'image complexe, dans le plan de reconstruction, établie lors de la première itération.

Etape 130 : Calcul d'une grandeur en plusieurs pixels de l'image complexe ${A}_{z}^{k}$

Au cours de cette étape, on calcule une grandeur *ε^{k}*(*x, y*) associée à chaque pixels d'une pluralité de pixels (*x, y*) de l'image complexe ${A}_{z}^{k}$, et de préférence en chacun de ces pixels. Cette grandeur dépend de la valeur ${A}_{z}^{k} \left(x, y\right)$ de l'image ${A}_{z}^{k}$, ou de son module, au pixel *(x, y)* à laquelle elle est calculée. Elle peut également dépendre d'une dérivée dimensionnelle de l'image en ce pixel, par exemple le module d'une dérivée dimensionnelle de cette image.

Dans cet exemple, la grandeur associée à chaque pixel (*x, y*) est basé sur le module d'une dérivée dimensionnelle, telle que : ${ε}^{k} \left(x, y\right) = \sqrt{{\left|\frac{\partial {A}_{z}^{k} \left(x, y\right)}{\partial x}\right|}^{2} + {\left|\frac{\partial {A}_{z}^{k} \left(x, y\right)}{\partial y}\right|}^{2}}$ (8)

L'image étant discrétisé en pixels, les opérateurs de dérivée peuvent être remplacés par des opérateurs de Sobel, de telle sorte que : ${ε}^{k} \left(x, y\right) = \sqrt{\left({S}_{x}∗{A}_{z}^{k}\left(x, y\right)\right) {\left({S}_{x}∗{A}_{z}^{k}\left(x, y\right)\right)}^{∗} + \left({S}_{y}∗{A}_{z}^{k}\left(x, y\right)\right) {\left({S}_{y}∗{A}_{z}^{k}\left(x, y\right)\right)}^{∗}}$ (9) où :
- ( )* désigne l'opérateur complexe conjugué ;
- *Sₓ* et *S_{y}* désignent des opérateurs de Sobel selon deux axes orthogonaux X et Y du plan de reconstruction *P_{z}*.

Selon cet exemple, ${S}_{x} = \left[\begin{matrix}1 & 0 & - 1 \\ 2 & 0 & - 2 \\ 1 & 0 & - 1\end{matrix}\right]$ (10) et *S_{y}* est la matrice transposée de *Sₓ,*

La figure 2D représente, sous la forme d'une image, la valeur de la grandeur *ε^{k}*(*x*, *y*), en chaque pixel, de l'image ${A}_{z}^{k = 1}$ représentée sur la figure 2C.

Etape 140 : établissement d'un indicateur de bruit associé à l'image ${A}_{z}^{k}$.

Lors de l'étape 130, on a calculé des grandeurs *ε^{k}*(*x, y*) en plusieurs pixels de l'image complexe ${A}_{z}^{k}$. Ces grandeurs peuvent former un vecteur **E*^{k}*,** dont les termes sont les grandeurs *ε^{k}*(*x*, *y*) associées à chaque pixel *(x, y).*

Dans cette étape, on calcule un indicateur, dit indicateur de bruit, à partir d'une norme du vecteur **E*^{k}***. D'une façon générale, à une norme est associée un ordre, de telle sorte que la norme ||**x**||***ₚ*** d'ordre p d'un vecteur x de dimension *n* de coordonnées (*x*₁,*x*₂, ... . *xₙ*,) est telle que : ${\left‖x\right‖}_{p} = {\left({\sum }_{i = 1}^{n} {\left|{x}_{i}\right|}^{p}\right)}^{1 / p} , avec p \geq 0 .$ (12)

Dans le cas présent, on utilise une norme d'ordre 1, autrement dit p = 1. Les inventeurs ont en effet estimé que le recours à une norme d'ordre 1, ou d'ordre inférieur ou égal à 1, est particulièrement adapté à cet algorithme, pour les raisons expliquées ci-après en lien les figures 3A et 3B.

Au cours de cette étape, la grandeur *ε^{k}*(*x*, *y*) calculée à partir de l'image complexe ${A}_{z}^{k}$, à chaque pixel *(x, y)* de cette dernière, est sommée de façon à constituer un indicateur de bruit *ε^{k}* associé à l'image complexe ${A}_{z}^{k}$. $Ainsi , {ε}^{k} = {\sum }_{\left(x, y\right)} {ε}^{k} \left(x, y\right)$ (15).

Cet indicateur de bruit ε correspond à une norme de variation totale de l'image complexe ${A}_{z}^{k}$

En se rapportant à l'exemple de la figure 2D, l'indicateur de bruit *ε*^{*k*=1} est obtenu, lors de la première itération, par une sommation de la valeur des pixels de cette image.

De façon alternative à une norme d'ordre 1, une somme pondérée des grandeurs *ε^{k}*(*x*, *y*), ou autre combinaison arithmétique, est également envisageable.

Du fait de l'utilisation d'une norme d'ordre 1, ou d'ordre inférieur ou égal à 1, la valeur de l'indicateur de bruit *ε^{k}* diminue lorsque l'image complexe ${A}_{z}^{k}$ est de plus en plus représentative de l'échantillon. En effet, lors des premières itérations, la valeur de la phase ${φ}_{0}^{k} \left(x, y\right)$, en chaque pixel *(x, y)* de l'image ${A}_{0}^{k}$ est mal estimée. La propagation de l'image de l'échantillon du plan de détection *P*₀ vers le plan de reconstruction *P_{z}* s'accompagne alors d'un bruit de reconstruction important, comme évoqué en lien avec l'art antérieur. Ce bruit de reconstruction se présente sous la forme de fluctuations apparaissant sur l'image reconstruite. Du fait de ces fluctuations, un indicateur de bruit *ε^{k},* tel que précédemment défini est d'autant plus élevé que la contribution du bruit de reconstruction, sur l'image reconstruite, est importante. En effet, les fluctuations dues au bruit de reconstruction tendent à augmenter la valeur de cet indicateur.

Les figures 3A et 3B schématisent un profil radial du module (ou d'une phase) d'une image reconstruite, en étant affectée d'un bruit de reconstruction respectivement fort et faible. On a considéré ici un échantillon comportant une dispersion de particules 10b dans un milieu homogène transparent 10a. Les profils schématisés comportent deux fluctuations importantes, chacune étant représentative d'une particule 10b. Le profil de la figure 3A comporte également des fluctuations d'amplitude plus faible, et de fréquence élevée, de représentatives d'un bruit de reconstruction. L'indicateur de bruit *ε^{k}*, tel que précédemment défini, est plus important sur la figure 3A que sur la figure 3B. L'utilisation d'un indicateur *ε^{k}* basé sur une norme d'ordre supérieur à 1 pourrait également convenir, mais une telle norme a tendance à atténuer les fluctuations d'amplitude faible, représentatives du bruit de reconstruction, par rapport à aux fluctuations importantes, représentatives de l'échantillon. A l'inverse, une norme d'ordre 1, ou d'ordre inférieur à 1, n'atténue pas les faibles fluctuations par rapport aux fluctuations importantes. C'est pourquoi les inventeurs préfèrent un indicateur de bruit de reconstruction *ε^{k}* basé sur une norme d'ordre 1 ou inférieur à 1.

Un aspect important de cette étape consiste à déterminer, dans le plan de détection *P*₀, des valeurs de phase ${φ}_{0}^{k} \left(x, y\right)$ de chaque pixel de l'image de l'échantillon ${A}_{0}^{k}$, permettant d'obtenir, lors d'une itération suivante, une image reconstruite ${A}_{z}^{k + 1}$ dont l'indicateur *ε*^{*k*+1} est inférieur à l'indicateur *ε^{k}.*

Lors de la première itération, comme précédemment expliqué, on ne dispose que d'une information pertinente sur l'intensité de l'onde lumineuse 22 mais non sur sa phase. La première image reconstruite ${A}_{Z}^{k = 1}$ dans le plan de reconstruction *P_{z}* est donc affectée d'un bruit de reconstruction important, du fait de l'absence d'information pertinente quant à la phase de l'onde lumineuse 22 dans le plan de détection *P*₀. Par conséquent, l'indicateur *ε*^{*k*=1} est élevé. Au cours des itérations suivantes, l'algorithme procède à un ajustement progressif de la phase ${φ}_{0}^{k} \left(x, y\right)$ dans le plan de détection *P*₀, de façon à minimiser progressivement l'indicateur *ε^{k}*.

L'image ${A}_{0}^{k}$ dans le plan de détection est représentative de l'onde lumineuse 22 dans le plan de détection *P*₀, aussi bien du point de vue de son intensité que de sa phase. Les étapes 120 à 160 visent à établir, de façon itérative, la valeur de la phase ${φ}_{0}^{k} \left(x, y\right)$ de chaque pixel de l'image ${A}_{0}^{k}$, minimisant l'indicateur *ε^{k},* ce dernier étant obtenu sur l'image ${A}_{z}^{k}$ obtenue par propagation de l'image ${A}_{0}^{k - 1}$ dans le plan de reconstruction *P_{z}*.

L'algorithme de minimisation peut être un algorithme de descente de gradient, ou de descente de gradient conjugué, ce dernier étant décrit ci-après.

### Etape 150 : Ajustement de la valeur de la phase dans le plan de détection.

L'étape 150 vise à déterminer une valeur de la phase ${φ}_{0}^{k} \left(x, y\right)$ de chaque pixel de l'image complexe ${A}_{0}^{k}$ de façon à minimiser l'indicateur *ε*^{*k*+1} résultant d'une propagation de l'image complexe ${A}_{0}^{k}$ dans le plan de reconstruction *P_{z}*, au cours de l'itération suivante k+1.

Pour cela, un vecteur de phase ${φ}_{0}^{k}$ est établi, dont chaque terme est la phase ${φ}_{0}^{k} \left(x, y\right)$ d'un pixel *(x, y)* de l'image complexe ${A}_{0}^{k}$*.* La dimension de ce vecteur est (Nₚᵢₓ, 1), où Nₚᵢₓ désigne le nombre de pixels considérés. Ce vecteur est mis à jour au cours de chaque itération, par l'expression de mise à jour suivante : ${φ}_{0}^{k} \left(x, y\right) = {φ}_{0}^{k - 1} \left(x, y\right) + {α}^{k} {p}^{k} \left(x, y\right)$ (16) où :
- *α^{k}* est un scalaire, désigné par le terme « pas », et représentant une distance ;
- ***p^{k}*** est un vecteur de direction, de dimension (Nₚᵢₓ, 1), dont chaque terme *p(x, y)* forme une direction du gradient ∇*ε^{k}* de l'indicateur *ε^{k}.*

Cette équation peut être exprimée sous forme vectorielle, comme suit : ${φ}_{0}^{k} = {φ}_{0}^{k - 1} + {α}^{k} {p}^{k}$ (16')

On peut montrer que : ${p}^{k} = - ∇ {ε}^{k} + {β}^{k} {p}^{k - 1}$ (17) où :
- **∇*ε^{k}*** est un vecteur de gradient, de dimension (Nₚᵢₓ, 1), dont chaque terme représente une variation de l'indicateur *ε^{k}* en fonction de chacun des degrés de liberté, formant les inconnues du problème, c'est-à-dire les termes du vecteur ${φ}_{0}^{k}$. ;
- ***p*^{*k*-1}** est un vecteur de direction établi lors de l'itération précédente ;
- *β^{k}* est facteur d'échelle appliqué au vecteur de direction ***p*^{*k*-1}.**

Chaque terme ∇*ε^{k}*(*x, y*) du vecteur de gradient **∇*ε^{k}*,** est tel que $∇ {ε}^{k} \left(r′\right) = \frac{\partial {ε}^{k}}{\partial {φ}_{0}^{k} \left(r′\right)} = - Im \left({A}_{0}^{{k}^{∗}}\left(r′\right)\left(\left({S}_{x}∗\frac{{S}_{x} ∗ {A}_{z}^{k}}{{ε}^{k}}+{S}_{y}∗\frac{{S}_{y} ∗ {A}_{z}^{k}}{{ε}^{k}}.\right)∗{h}_{z}\right)\left(r′\right)\right)$ (18) où Im représente l'opérateur partie imaginaire et r' représente une coordonnée (*x, y*) dans le plan de de détection.

Le facteur d'échelle *β^{k}* est un scalaire pouvant être exprimé de telle sorte que : ${β}^{\left(k\right)} = \frac{∇ {ε}^{\left(k\right)} . ∇ {ε}^{\left(k\right)}}{∇ {ε}^{\left(k-1\right)} . ∇ {ε}^{\left(k-1\right)}}$ (19), où. désigne le produit scalaire.

Le pas *α^{k}* peut varier selon les itérations, par exemple entre 0.03 au cours des premières itérations et 0.0005 lors des dernières itérations.

L'équation de mise à jour permet d'obtenir un ajustement du vecteur ${φ}_{0}^{k}$**,** ce qui entraîne une mise à jour itérative de la phase ${φ}_{0}^{k} \left(x, y\right)$ en chaque pixel de l'image complexe ${A}_{0}^{k}$*.* Cette image complexe ${A}_{0}^{k}$, dans le plan de détection, est alors mise à jour par ces nouvelles valeurs de la phase associée à chaque pixel. Notons que le module de l'image complexe ${A}_{0}^{k}$ n'est pas modifié, ce dernier étant déterminé à partir de l'image acquise par le capteur d'image, de telle sorte que ${M}_{0}^{k} \left(x, y\right) = {M}_{0}^{k = 0} \left(x, y\right)$.

### Etape 160 : Réitération ou sortie d'algorithme.

Tant qu'un critère de convergence n'est pas atteint, l'étape 160 consiste à réitérer l'algorithme, par une nouvelle itération des étapes 120 à 160, sur la base de l'image complexe ${A}_{0}^{k}$ mise à jour lors de l'étape 150.

Le critère de convergence peut être un nombre K prédéterminé d'itérations, ou une valeur minimale du gradient ∇*ε^{k}* de l'indicateur, ou une différence considérée comme négligeable entre deux vecteurs de phase ${φ}_{0}^{k - 1} , {φ}_{0}^{k}$ consécutifs. Lorsque le critère de convergence est atteint, on dispose d'une estimation considérée comme correcte d'une image complexe de l'échantillon, dans le plan de détection *P*₀ ou dans le plan de reconstruction *P_{z}*.

### Etape 170 : Obtention de l'image complexe de référence.

A l'issue de la dernière itération, le procédé peut comprendre une propagation de l'image complexe ${A}_{0}^{k}$ résultant de la dernière itération dans le plan de reconstruction *P_{z}*, de manière à obtenir une image complexe de référence ${A}_{ref} = {A}_{z}^{k}$. De façon alternative, l'image complexe de référence *A_{ref}* est l'image complexe ${A}_{0}^{k}$ résultant de la dernière itération dans le plan de détection *P*₀. Lorsque la densité des particules est élevée, cette alternative est cependant moins avantageuse car la résolution spatiale dans le plan de détection *P*₀ est moins élevée que dans le plan de reconstruction *P_{z}*, notamment lorsque le plan de reconstruction *P_{z}* correspond à un plan *P*₁₀ selon lequel s'étend l'échantillon.

La figure 2E représente une image du module ${M}_{Z}^{k = 30}$ de chaque pixel de l'image complexe de référence ${A}_{Z}^{k = 30}$ obtenue dans un plan de reconstruction *P_{z}* à l'issue de 30 itérations. Cette image peut être comparée à la figure 2C, montrant une image similaire ${A}_{Z}^{k = 1}$ obtenue lors de la première itération. On observe une nette diminution du bruit de reconstruction, en particulier entre chaque particule. En outre, la résolution spatiale de cette image permet une meilleure identification des coordonnées radiales (*x, y*) de chaque particule. Ces conclusions concernent également l'image de phase ${φ}_{Z}^{k = 30}$ de chaque pixel de l'image de référence ${A}_{ref} = {A}_{Z}^{k = 30}$.

### Etape 180 : Sélection des coordonnées radiales de particules.

Au cours de cette étape, on sélectionne les coordonnées radiales (*x,* y) d'une particule à partir de l'image de référence ${A}_{ref} = {A}_{Z}^{k = 30}$, par exemple à partir de l'image de son module ${M}_{ref} = {M}_{Z}^{k = 30}$ ou de l'image de sa phase ${φ}_{ref} = {φ}_{Z}^{k = 30}$. Comme précédemment évoqué, le terme coordonnée radiale désigne une coordonnée dans le plan de détection ou dans le plan de reconstruction. Il est également envisageable d'effectuer cette sélection à partir de l'hologramme *I*₀ ou à partir de l'image complexe ${A}_{0}^{k}$ obtenue dans le plan de détection suite à la dernière itération. Cependant, lorsque le nombre de particules augmente, il est préférable d'effectuer cette sélection sur l'image formée dans le plan de reconstruction, du fait de sa meilleure résolution spatiale, en particulier lorsque le plan de reconstruction correspond *P_{z}* au plan de l'échantillon *P*₁₀.

Sur la figure 2E, on a représenté la sélection d'une particule, entourée par un contour en pointillés.

### Etape 185 : Application d'un opérateur de propagation

Au cours de cette étape 185, l'image complexe de référence *A_{ref}* est propagée selon une pluralité de distances de reconstruction, en utilisant un opérateur de propagation h tel que précédemment défini, de façon à disposer d'une pluralité d'images complexes, dites secondaires, *A_{ref,z}* reconstruites à différentes distances du plan de détection *P*₀ ou du plan de reconstruction *P_{z}*. Ainsi, cette étape comprend la détermination d'une pluralité d'images complexes *A_{ref,z}* telles que : ${A}_{ref , z} = {A}_{ref} ∗ {h}_{z} \left(20\right) avec {z}_{min} \leq z \leq {z}_{max} .$

Les valeurs *zₘᵢₙ* et *zₘₐₓ* sont les coordonnées minimales et maximales, selon l'axe Z, selon lesquelles l'image complexe de référence est propagée. De préférence, les images complexes sont reconstruites selon une pluralité de coordonnées z entre l'échantillon 10 et le capteur d'image 16. Les images complexes peuvent être formées de part et d'autre de l'échantillon 10.

Ces images complexes secondaires sont établies par une simple application d'un opérateur de reconstruction holographique *h* à l'image de référence *A_{ref}.* Or, cette dernière est une image complexe décrivant correctement l'onde lumineuse 22 à laquelle est exposé le capteur d'image, en particulier au niveau de sa phase, suite aux itérations des étapes 120 à 160. Par conséquent, les images secondaires *A_{ref,z}* forment un bon descripteur de la propagation de l'onde lumineuse 22 selon l'axe de propagation Z. Elles sont obtenues très simplement à partir de l'image complexe de référence. De ce fait, on peut obtenir aisément, à partir de l'image complexe de référence, une pile d'images reconstruites, et cela rapidement car la simple application d'un opérateur de propagation à l'image complexe de référence est une opération peu coûteuse en temps.

### Etape 190 : Formation d'un profil

Au cours de cette étape, à partir de chaque image complexe secondaire *A_{ret,z},* on détermine une grandeur caractéristique de l'onde lumineuse 22 de façon à déterminer un profil représentant l'évolution de ladite grandeur caractéristique selon l'axe de propagation Z. La grandeur caractéristique peut être :
- le module, auquel cas le profil est formé à partir du module *M_{ref,2}*(*x, y*) de chaque image complexe secondaire *A_{ref,2}*(*x, y*) *à* la position radiale (*x, y*) préalablement sélectionnée. On obtient alors un profil M(z) ;
- la phase, auquel cas le profil est formé à partir de la phase *φ_{ref,z}(x, y*) de chaque image complexe secondaire *A_{ref,2}*(*x, y*) à la position radiale (*x, y*) préalablement sélectionnée. On obtient alors un profil *φ*(*z*) ;
- une combinaison du module et de la phase de chaque image, par exemple sous la forme d'un ratio $k \left(x, y\right) = \frac{{φ}_{ref , z} \left(x, y\right)}{{M}_{ref , z} \left(x, y\right)}$. On obtient alors un profil *k(z).*

La figure 2F représente l'évolution de la phase *φ*(z) de l'onde lumineuse 22 le long de l'axe de propagation Z.

### Etape 200 : Caractérisation

La particule peut ensuite être caractérisée à partir du profil formé lors de l'étape précédente. De préférence, on dispose d'une base de données de profils étalons formés au cours d'une phase d'apprentissage à l'aide d'échantillons étalons connus. La caractérisation est alors effectuée par une comparaison ou d'une classification du profil formé sur la base des profils étalons.

Dans l'exemple qui a été donné, la grandeur *ε^{k}*(*x, y*)*,* associée à chaque pixel, mise en œuvre dans l'étape 130 est basée sur une dérivée dimensionnelle en chaque pixel (*x, y*) de l'image ${A}_{z}^{k}$. Selon une variante, l'image initiale ${A}_{0}^{k = 0}$ est normalisée, comme précédemment décrit, par un scalaire ou une image représentative de l'onde incidente 12. De cette façon, en chaque pixel, le module de l'image de l'échantillon, dans le plan de détection ou dans le plan de reconstruction, est inférieur ou égal à 1. La grandeur *ε^{k}*(*x, y*) associée à chaque pixel, dans l'étape 130 est un module d'une différence de l'image ${A}_{z}^{k}$*,* en chaque pixel, et la valeur 1. Une telle grandeur peut être obtenue selon l'expression : ${ε}^{k} \left(x, y\right) = \sqrt{\left({A}_{z}^{k}\left(x, y\right)-1\right) {\left({A}_{z}^{k}\left(x, y\right)-1\right)}^{∗}} = \left|{A}_{z}^{k}\left(x, y\right)-1\right|$ (20) et, lors de l'étape 140, ${ε}^{k} = {\sum }_{\left(x, y\right)} {ε}^{k} \left(x, y\right)$ (21), ce qui correspond, sous une forme non discrétisée, à ${ε}^{k} \left({A}_{z}^{k}\right) = \int \left|{A}_{z}^{k}-1\right| = \int \vec{dr} ⋅ \sqrt{\left({A}_{z}^{k}\left(r\right)-1\right) {\left({A}_{z}^{k}\left(r\right)-1\right)}^{∗}}$ (22), r désignant une coordonnée radiale dans le plan de reconstruction.

L'indicateur de bruit est à nouveau une norme d'ordre 1 d'un vecteur **E*^{k}*** dont chaque terme est le module *ε^{k}*(*x, y*) calculé en chaque pixel.

On peut montrer que le gradient de cet indicateur de bruit *ε^{k},* par rapport au vecteur de phase, est tel que : $∇ {ε}^{k} \left({r}^{′}\right) = \frac{\partial {ε}^{k}}{\partial {φ}_{0}^{k} \left({r}^{′}\right)} = Im \left({A}_{0}^{{k}^{*}}\right) \left(r′\right) . \left(\frac{\left({A}_{z}^{k}-1\right)}{\left|{A}_{z}^{k}-1\right|}∗{h}_{z}\right) \left(r′\right)$ (23) *r'* désignant une coordonnée radiale dans le plan de détection.

De même que la norme de type variation totale, précédemment décrite, en lien avec l'expression (15), l'utilisation d'un tel indicateur est adapté à un échantillon comportant des particules 10b dispersées dans un milieu homogène 10a. Lors de l'algorithme de descente de gradient, cet indicateur tend à réduire le nombre de pixels dont le module n'est pas égal à 1 selon des zones réparties de façon discrètes dans l'image de l'échantillon, ces zones correspondant aux particules 10b de l'échantillon.

Selon une autre variante, lors de l'étape 130, la norme est telle que : ${ε}^{k} \left(x, y\right) = \left(\left({A}_{z}^{k}\left(x, y\right)\right){\left({A}_{z}^{k}\left(x, y\right)\right)}^{∗}-1\right) = \left|{A}_{z}^{k}{\left(x, y\right)}^{2}\right| - 1$ (25)

Et, lors de l'étape 140, ${ε}^{k} = 1 / 2 {\sum }_{\left(x, y\right)} {\left({ε}^{k}\left(x, y\right)\right)}^{2}$ (26), ce qui correspond, sous une forme non discrétisée, à ${ε}^{k} = \frac{1}{2} \int {\left({\left|{A}_{z}^{k}\right|}^{2}-1\right)}^{2}$ (27)

De même que dans les modes de réalisation précédents, l'étape 130 comporte un calcul d'une grandeur *ε^{k}*(*x, y*) associée à chaque pixel, basée sur un module de l'image complexe ${A}_{z}^{k}$, puis le calcul d'un indicateur de bruit associé à l'image complexe ${A}_{z}^{k}$ basé sur une norme. Selon cette variante, il s'agit d'une norme d'ordre 2.

On peut montrer que le gradient de cet indicateur, par rapport au vecteur de phase, est tel que : $∇ {ε}^{k} \left({r}^{′}\right) = \frac{\partial {ε}^{k}}{\partial {φ}_{0}^{k} \left({r}^{′}\right)} = 2 Im {A}_{0}^{{k}^{*}} \left(\left({\left|{A}_{z}^{k}\right|}^{2}-1\right){A}_{z}^{k}\right) ∗ {h}_{z} \left(r′\right)$ (28)

Selon une autre variante, lors de l'étape 130, la grandeur associée à chaque pixel est telle que ${ε}^{k} \left(x, y\right) = \left(\left({A}_{z}^{k}\left(x, y\right)\right){\left({A}_{z}^{k}\left(x, y\right)\right)}^{∗}-1\right) = \left|{A}_{z}^{k}{\left(x, y\right)}^{2}\right| - 1$ (30)

Et, lors de l'étape 140, ${ε}^{k} = {\sum }_{\left(x, y\right)} {ε}^{k} \left(x, y\right)$ (31), ce qui correspond, sous une forme non discrétisée, à ${ε}^{k} = \frac{1}{2} \int \left|{\left|{A}_{z}^{k}\right|}^{2}-1\right|$ (32) La grandeur associée à chaque pixel est identique à la variante précédente (cf. équation (25)), mais l'indicateur de bruit associé à l'image est calculé selon une norme d'ordre 1.

Selon une autre variante, lors de l'étape 130, la grandeur associée à chaque pixel est telle que ${ε}^{k} \left(x, y\right) = \left|\sqrt{\left({A}_{z}^{k}\left(x, y\right)\right) \left({A}_{z}^{k}\left(x, y\right)\right) *}-1\right| = \left|{A}_{z}^{k}\left(x, y\right)\right| - 1$ (35)

Et, lors de l'étape 140, *ε^{k}* = ∑_{(x,y)} *ε^{k}*(*x,y*) (36), ce qui correspond, sous une forme non discrétisée, $à {ε}^{k} = \frac{1}{2} \int \left|\left|{A}_{z}^{k}\right|-1\right|$ (37)

Ainsi, quel que soit le mode de réalisation, l'indicateur de bruit *ε^{k}* associé à une image complexe ${A}_{z}^{k}$, peut être obtenu par :
- le calcul d'une grandeur en une pluralité de pixels de l'image, basé sur une valeur de cette dernière, un module de cette dernière ou d'une dérivée dimensionnelle de cette dernière ;
- la combinaison desdites grandeurs sous la forme d'une norme, et de préférence d'une norme d'ordre inférieur à 1.

La figure 4 résume les principales étapes de l'algorithme précédemment décrit : à partir d'une image *I*₀ acquise par le capteur d'image 16, on forme une image initiale ${A}_{0}^{k = 0}$. Lors de chaque itération *k,* une image complexe ${A}_{z}^{k}$, représentant l'onde lumineuse 22 dans un plan de reconstruction *P_{z}* est établie par propagation numérique d'une image ${A}_{0}^{k}$ représentant l'onde lumineuse 22 dans le plan de détection *P*₀. Un indicateur de bruit *ε^{k}* est associé à l'image ${A}_{z}^{k}$*.* Son gradient **∇*ε^{k}*,** en fonction de la phase ${φ}_{0}^{k}$ de l'onde lumineuse 22, dans le plan de détection *P*₀, est calculé, sur la base duquel ladite phase de l'onde lumineuse 22, dans le plan de détection, est mise à jour. Cette mise à jour permet de former une nouvelle image complexe ${A}_{0}^{k + 1}$ dans le plan de détection *P*₀, sur la base de laquelle une nouvelle itération peut être menée. Après l'atteinte d'un critère de convergence, on obtient une image de référence *A_{ref},* qui est, dans cet exemple, l'image obtenue par propagation de l'image ${A}_{0}^{k}$, obtenue lors de la dernière itération, dans le plan de l'échantillon *P*₁₀ (étape 170). Cette image de référence permet de sélectionner une position radiale (*x, y*) d'une particule à examiner (étape 180). Un opérateur de propagation h lui est appliqué, de façon à former plusieurs images complexes secondaires *A_{ref,z},* selon plusieurs coordonnées le long de l'axe de propagation Z (étape 185). A partir de la valeur des différentes images secondaires *A_{ref,z}* à la position radiale sélectionnée, on obtient un profil d'une grandeur caractéristique de l'onde lumineuse 22 suivant l'axe de propagation (étape 190).

Sur les modes de réalisation précédemment décrits, l'indicateur *ε^{k}* décrit une fonction croissante selon le bruit de reconstruction. En d'autres termes, plus le bruit de reconstruction est important, plus l'indicateur *ε^{k}* est élevé. L'algorithme d'optimisation tend donc à minimiser cet indicateur, en particulier sur la base de son gradient **∇*ε^{k}*.** L'invention peut naturellement être appliquée en considérant un indicateur décrivant une fonction décroissante selon le bruit de reconstruction, l'indicateur étant d'autant plus faible que le bruit de reconstruction est élevé. L'algorithme d'optimisation tend alors à maximiser l'indicateur, en particulier sur la base de son gradient. D'une façon générale, il est préférable que l'indicateur de bruit suive une fonction monotone de l'amplitude cumulée du bruit de reconstruction sur l'image complexe.

L'invention a été mise en œuvre, en utilisant la norme de variation totale sur des cellules de type CHO, acronyme de cellules ovariennes de hamster, baignant dans un milieu de culture CD CHO (Thermofischer). L'échantillon a été placé dans une chambre fluidique d'épaisseur 100 µm, disposé à une distance de 8 cm d'une diode électroluminescente, dont la bande spectrale est centrée sur 450 nm. L'échantillon est placé à une distance de 1500 µm d'un capteur d'image CMOS de 2748x3840 pixels .L'ouverture du filtre spatial 18 a un diamètre de 150 µm.

La figure 5A représente l'image *I*₀ acquise par le capteur d'image 16. Les images du module et de la phase de l'image complexe de référence *A_{ref},* dans le plan de l'échantillon *P*₁₀, sont respectivement représentées sur les figures 5B et 5C. Ces images ont été obtenues en 100 itérations. L'homogénéité des niveaux de gris entre chaque cellule atteste de la qualité de la reconstruction. On a appliqué, sur cette image de référence, un opérateur de propagation h tel que précédemment décrit, de façon à disposer d'une pluralité d'images complexes secondaires *A_{ref,z}* selon l'axe de propagation Z. Par ailleurs, sur l'image du module ou sur l'image de la phase de l'image de référence, on a identifié deux cellules, respectivement entourées par un contour en tirets noirs (cellule 10b-1) et en pointillés noirs (cellule 10b-2) sur les figures 5B et 5C. Les coordonnées radiales (*x, y*) de ces deux cellules ont été extraites. On a formé, pour chaque cellule, un profil M(z) représentatif du module et un profil *φ*(*z*) représentatif de la phase de l'onde lumineuse 22 atteignant le capteur d'image 16. La valeur de chaque point du profil est respectivement obtenu en déterminant le module et la phase d'une image complexe secondaire *A_{ref,z}* auxdites coordonnées radiales (*x, y*).

Les figures 5D et 5E représentent respectivement le profil du module et de la phase de la cellule 10b-1. Les figures 5F et 5G représentent respectivement le profil du module et de la phase de la cellule 10b-2. Chaque profil a été déterminé entre des coordonnées zₘᵢₙ = 552 µm et zₘₐₓ = 2152 µm avec un pas en z de 40 µm. Le plan de reconstruction est situé à 1352 µm du plan de détection.

Par ailleurs, on a procédé, suite à ces reconstructions, à une coloration des cellules au bleu Trypan, puis à leur observation à l'aide d'un microscope, en utilisant un grossissement x 10. Le bleu de Trypan est un colorant couramment utilisé pour la détermination de la viabilité cellulaire. L'image obtenue est montrée sur la figure 5H. La cellule 10b-1 est une cellule vivante, tandis que la cellule 10b-2 apparaît comme étant une cellule morte.

Les profils de module ou de phase des figures 5D et 5E peuvent être considérés comme représentatifs d'une cellule CHO vivante, tandis que les figures 5F et 5G peuvent être considérés comme représentatifs d'une cellule CHO morte. La caractérisation de cellules CHO peut être réalisée sur la base de tels profils.

Un autre exemple est présenté sur les figures 6A à 6E. Dans ces exemples, l'échantillon comporte des globules rouges dilués dans une solution aqueuse comportant un tampon PBS (Tampon Phosphate Salin) dilué au 1/400. L'échantillon 10 a été placé dans une chambre fluidique 15 d'épaisseur 100 µm, disposée à une distance de 8 cm de la diode électroluminescente précédemment décrite, dont la bande spectrale est centrée sur 450 nm. L'échantillon est placé à une distance de 1.5 mm du capteur d'image CMOS précédemment décrit. L'ouverture du filtre spatial 18 s'élève à 150 µm.

La figure 6A représente l'image *I*₀ acquise par le capteur d'image. Les images du module et de la phase de l'image complexe ${A}_{z}^{k = 8}$ reconstruite, dans le plan de l'échantillon *P*₁₀, sont respectivement représentées sur les figures 6B et 6C. Ces images ont été obtenues en 8 itérations.

L'image ${A}_{z}^{k = 8}$ constitue une image de référence *A_{ref},* à laquelle l'opérateur de propagation *h* précédemment décrit a été appliqué, de façon à disposer d'une pluralité d'images complexes secondaires *A_{ref,z}* selon l'axe de propagation Z. Par ailleurs, sur l'image du module ou sur l'image de la phase de l'image de référence, on a identifié un globule rouge, ce dernier étant entouré par des pointillés sur chacune de ces images. Les coordonnées radiales (*x, y*) de ce globule rouge ont été extraites. A partir des images secondaires *A_{ref,z},* on a formé un profil M(z) représentatif du module et un profil *φ*(*z*) représentatif de la phase de l'onde lumineuse 22 atteignant le capteur d'image 16. La valeur de chaque point du profil est respectivement obtenue en déterminant le module et la phase d'une image secondaire auxdites coordonnées radiales. Les figures 6D et 6E représentent respectivement le profil du module et de la phase du globule rouge ainsi sélectionné. Le profil a été déterminé entre des coordonnées zₘᵢₙ = 1000 µm et zₘₐₓ = 2000 µm avec un pas en z de 5 µm. Le plan de reconstruction est situé à 1380 µm du plan de détection, ce qui correspond à l'abscisse 76 sur les figures 6D et 6E.

Cet essai a été réitéré sur la base d'un autre hologramme *I*₀ représenté sur la figure 7A. Les figures 7B et 7C représentent respectivement les images du module et de la phase d'une image complexe ${A}_{z}^{k = 8}$ reconstruite dans le plan de l'échantillon *P*₁₀, après 8 itérations. On a extrait de ces images des coordonnées radiales (*x, y*) d'un globule rouge. L'image complexe ${A}_{z}^{k}$ a été propagée à différentes coordonnées selon l'axe de propagation Z de façon à obtenir autant d'images secondaires *A_{ref,z}* à partir desquelles on a formé un profil M(z) représentatif du module (figure 7D) et un profil *φ*(*z*) représentatif de la phase (figure 7E) de l'onde lumineuse 22 atteignant le capteur d'image 16.

La figure 8A représente une image *I*₀ acquise par le capteur d'image, l'échantillon observé étant une émulsion formé de goutelettes d'huile d'adaptation d'indice, dont l'indice de réfraction est égal à 1.38 (référence Series AAA n =1.3800 ± 0.0002, fabricant Cargille labs) baignant dans un tampon PBS, acronyme de tampon phosphate salin. La dimension des goutelettes représentées sur ces images est comprise entre 5 et 9 µm. L'échantillon est disposé dans une chambre fluidique 15 d'épaisseur 100 µm, à 8 cm d'un filtre spatial de diamètre 150 µm disposé en aval d'une diode électroluminescente émettant dans une bande spectrale centrée autour de 450 nm. La distance entre l'échantillon et le détecteur est de 1.5 mm. Les images du module et de la phase de l'image complexe ${A}_{z}^{k = 8}$ reconstruite, à partir de l'hologramme *I*₀, dans le plan de l'échantillon *P*₁₀, sont respectivement représentées sur les figures 8B et 8C. Ces images ont été obtenues en 8 itérations. Sur chacune de ces images, on a identifié une goutelette, entourée par un contour en pointillés. Les coordonnées radiales (*x, y*) de cette goutelette a été extraite. On a formé un profil M(z) représentatif du module et un profil *φ*(*z*) représentatif de la phase de l'onde lumineuse 22 atteignant le capteur d'image 16, passant par la goutelette. La valeur de chaque point du profil est respectivement obtenue en déterminant le module et la phase d'une image secondaire auxdites coordonnées radiales. Les figures 8E et 8G représentent respectivement le profil du module et la phase de l'onde lumineuse 22 atteignant le capteur d'image 16.

Par ailleurs, on a utilisé, comme image complexe de référence, l'image *I*₀ acquise par le capteur d'image, c'est-à-dire l'hologramme. Cette image a fait l'objet d'une propagation numérique selon plusieurs coordonnées z, de façon à obtenir des images complexes secondaires, à partir desquelles on a obtenu les profils du module et de la phase de chaque image complexe secondaire. Les figures 8D et 8F représentent respectivement le profil du module et de la phase ainsi obtenus.

Le profil a été déterminé entre des coordonnées zₘᵢₙ = 1000 µm et zₘₐₓ = 2000 µm avec un pas en z de 5 µm. Le plan de reconstruction est situé à 1380 µm du plan de détection, ce qui correspond à l'abscisse 76 sur les figures 8D à 8G.

Ainsi, les figures 8D et 8F sont des profils obtenus en appliquant l'opérateur de propagation h directement à l'hologramme *I*₀ acquis par le détecteur 16, tandis que les figures 8E et 8G sont des profils obtenus en appliquant l'opérateur de propagation à une image complexe de référence *A_{ref}* mettant en œuvre le procédé décrit ci-avant à partir dudit hologramme *I*₀. On observe que les profils formés sur la base d'une propagation de l'image de référence (fig. 8E et 8G) ont une dynamique plus importante que ceux obtenus sur la base d'une propagation de l'hologramme (fig.8D et 8F), ce dernier étant dépourvu d'information pertinente quant à la phase.

La caractérisation d'une particule peut également permettre une estimation de son volume, et c'est particulièrement le cas de particules sphériques. La figure 9A représente le module d'une image complexe de référence obtenue à partir d'un échantillon comportant des billes de latex de diamètres 3 µm et 5 µm en suspension dans un tampon phosphate salin (PBS). Les billes de latex sont des billes fournies par DUKE sous les références 4205A (diamètre 5 µm) et 4203A (diamètre 3 µm). L'échantillon comporte 19 billes de 3 µm et 55 billes de 5 µm. L'épaisseur de l'échantillon est de 100 µm. L'échantillon est éclairé dans la bande spectrale bleue, centrée sur 450 nm, définie ci-avant. Sur chaque particule, un opérateur propagation a été appliqué à l'image complexe de référence, de manière à obtenir une pile d'images reconstruites. Puis on a déterminé le profil du module et de la phase de chaque image complexe, le profil passant par le centre de chaque particule telles qu'elles apparaissent sur la figure 9A. Les figure 9B et 9C représente respectivement les profils du module et de phase obtenus pour différentes particules. Les profils tracés en noir et en gris correspondent respectivement aux billes de diamètre 5µm et 3µm. On observe que les profils forment une signature du volume de chaque bille. En effet, les profils correspondant à des particules de même volume décrivent une même évolution selon l'axe Z. Il est alors possible de caractériser chaque profil selon un critère discriminant appliqué au profil, de façon à effectuer une discrimination entre les billes selon leur volume, ce qui permet également d'effectuer un comptage des billes de même volume. Le critère discriminant peut être un écart entre la valeur maximale du profil et sa valeur minimale, ou un critère de largeur à mi-hauteur ou un critère de hauteur entre la valeur maximale du profil et sa valeur minimale.

Afin de tester la reproductibilité de cette méthode, un autre essai a été effectué en utilisant d'autres billes de latex, en l'occurrence 15 billes de diamètre 3 µm et 30 billes de diamètre 5 µm. L'échantillon est éclairé dans la bande spectrale verte centrée sur 540 nnm. La figure 9D montre le module de l'image complexe de référence. Les figures 9E et 9F représentent respectivement les profils du module et de phase obtenus pour différentes particules, en utilisant le même code couleur. On observe à nouveau qu'une classification des billes en fonction de leur volume peut être réalisée sur la base des profils d'amplitude ou de phase.

Quel que soit le mode de réalisation le procédé comporte une sélection plusieurs coordonnées radiales représentatives d'une même particule, par exemple des coordonnées radiales adjacentes correspondant à une même particule. A partir des images complexes secondaires, le procédé comporte la détermination d'une grandeur caractéristique à chacune des coordonnées radiales sélectionnées. On forme ainsi autant de profils, selon l'axe Z, que de coordonnées sélectionnées. Ces profils, dits profils élémentaires, peuvent être combinés, par exemple sous la forme d'une moyenne, de façon à former un profil représentatif de la particule.

Quel que soit le mode de réalisation, l'estimation d'une distance entre le plan de détection *P*₀ et le plan de l'échantillon *P*₁₀ peut être nécessaire, notamment lorsque l'image complexe de référence est formée dans le plan de ce dernier. Cette distance peut être connue de façon géométrique, ou peut être estimée par la mise en œuvre d'un algorithme d'autofocus, courant dans le domaine de la reconstruction holographique.

L'invention pourra s'appliquer à l'observation d'un échantillon par reconstruction holographique, l'hologramme étant obtenu soit par imagerie sans lentille, soit par imagerie défocalisée. Dans ce cas, l'hologramme est une image acquise par un capteur d'image, dans un plan différent du plan de focalisation d'un système optique couplé au capteur d'image.

Elle pourra s'appliquer à la caractérisation d'échantillons dans le domaine des biotechnologies, du diagnostic, mais également dans le domaine de l'agroalimentaire, ou de l'analyse d'échantillons prélevés dans l'environnement ou dans des procédés industriels.

## Revendications

1. Procédé de caractérisation d'une particule (10b) contenue dans un échantillon (10), comportant les étapes suivantes :
a) illumination dudit échantillon à l'aide d'une source de lumière (11), la source de lumière émettant une onde lumineuse incidente (12) se propageant vers l'échantillon (10) selon un axe de propagation (Z) ;
b) acquisition, à l'aide d'un capteur d'image (16), d'une image (*I*₀) de l'échantillon (10), formée dans un plan de détection (*P*₀), l'échantillon étant disposé entre la source de lumière (11) et le capteur d'image (16), l'image étant représentative d'une onde lumineuse (22) transmise par l'échantillon sous l'effet de ladite illumination, l'image acquise comportant des figures d'interférence entre une composante résultant de l'onde lumineuse incidente (12) non absorbée par l'échantillon et une composante résultant de la diffraction de l'onde lumineuse incidente (12) par l'échantillon le procédé comprenant également les étapes suivantes :
c) application d'un opérateur de propagation (h) à l'image acquise (*I*₀) lors de l'étape b), de façon à calculer une image complexe (*A_{ref}*), dite image de référence, représentative de l'échantillon, dans un plan de reconstruction (*P_{z}, P*₀) ;
d) sélection d'une position radiale (*x, y*) de ladite particule dans un plan parallèle au plan de détection (*P*₀) ;
e) à partir de l'image complexe de référence (*A_{ref}*) calculée lors de l'étape c), détermination d'au moins une grandeur caractéristique (*M, φ, k*) de la phase et/ou de l'amplitude de l'onde lumineuse (22) transmise par l'échantillon, et cela à la position radiale sélectionnée à l'étape d) et à une pluralité de distances du plan de détection (*P*₀) ou du plan de reconstruction (*P_{z}*), l'étape e) comportant :
▪ l'application d'un opérateur de propagation (h) à l'image complexe de référence (*A_{ref}*), de façon à calculer des images complexes dites secondaires (*A_{ref,z}*) selon une pluralité de distances du plan de reconstruction (*P_{Z}*) ou du plan de détection (*P*₀);
▪ la détermination d'au moins une grandeur caractéristique de l'onde lumineuse (22) transmise par l'échantillon (10) à chacune desdites distances, à partir des images complexe secondaire (*A_{ref,z}*);
f) formation d'un profil, représentant l'évolution de la grandeur caractéristique déterminée lors de l'étape e) selon un axe parallèle à l'axe de propagation (Z) et passant par la position radiale *(x, y)* sélectionnée lors de l'étape d);
g) caractérisé en une caractérisation de la particule en fonction du profil formé lors de l'étape f, la caractérisation :
- comportant une comparaison ou une classification du profil formé lors de l'étape f) en se basant sur des profils étalons, formés au cours d'une phase d'apprentissage ;
- ou étant basée sur une métrique permettant une comparaison entre le profil formé lors de l'étape f) et des profils étalons formés au cours d'une phase d'apprentissage.

2. Procédé selon la revendication 1, dans lequel chaque grandeur caractéristique est déterminée à partir du module ou de l'argument d'une image complexe secondaire (*A_{ref,z}*).

3. Procédé selon l'une quelconque des revendications précédentes, dans lequel la caractérisation est basée sur une métrique permettant une classification du profil obtenu lors de l'étape f) selon des classes associées aux profils étalons.

4. Procédé selon l'une quelconque des revendications 1 à 3, dans lequel lors de l'étape d), la position radiale de chaque particule (*x, y*) est sélectionnée à l'aide de l'image acquise (*I*₀) lors de l'étape b) ou à l'aide de l'image complexe de référence (*A_{ref,z}*) calculée lors de l'étape c).

5. Procédé selon l'une quelconque des revendications précédentes, dans lequel aucune optique de grossissement n'est disposée entre l'échantillon (10) et le capteur d'image (16).

6. Procédé selon l'une quelconque des revendications précédentes, dans lequel :
- l'étape d) comporte une sélection d'une pluralité de coordonnées radiales représentatives d'une même particule ;
- l'étape f) comporte une formation d'une pluralité de profils, dits profils élémentaires, à chaque coordonnée radiale sélectionnée, et la combinaison desdits profils de façon à former un profil représentatif de ladite particule.

7. Procédé selon l'une quelconque des revendications précédentes, dans lequel lors de l'étape c), le calcul de l'image complexe de référence comporte les sous-étapes suivantes :
i) définition d'une image initiale de l'échantillon ( ${A}_{0}^{k = 0}$) dans le plan de détection, à partir de l'image (*I*₀) acquise par le capteur d'image ;
ii) détermination d'une image complexe de l'échantillon ( ${A}_{z}^{k}$) dans un plan de reconstruction (*P_{z}*) en appliquant un opérateur de propagation à l'image initiale de l'échantillon ( ${A}_{0}^{k = 1}$) définie lors de la sous-étape i) ou à l'image de l'échantillon ( ${A}_{0}^{k - 1}$), dans le plan de détection, résultant de l'itération précédente (k - 1);
iii) calcul d'un indicateur de bruit (*ε^{k}*) à partir de l'image complexe ( ${A}_{z}^{k}$) déterminée lors de la sous-étape ii), cet indicateur de bruit dépendant d'un bruit de reconstruction affectant ladite image complexe ( ${A}_{z}^{k}$) ;
iv) mise à jour de l'image de l'échantillon ( ${A}_{0}^{k}$) dans le plan de détection (*P*₀) par un ajustement de valeurs de phase ( ${φ}_{0}^{k} \left(x, y\right)$) des pixels de ladite image, l'ajustement étant réalisé en fonction d'une variation de l'indicateur calculé lors de la sous-étape iii) selon lesdites valeurs de phase, de façon à minimiser l'indicateur de bruit ;
v) réitération des sous-étapes ii) à iv) jusqu'à l'atteinte d'un critère de convergence, de façon à obtenir une image complexe de référence de l'échantillon (10) dans le plan détection (*P*₀), ou dans le plan de reconstruction (*P_{z}*), le critère de convergence étant
- un nombre prédéterminé d'itérations ;
- ou une valeur minimale d'un gradient (∇*ε^{k}*) de l'indicateur de bruit ;
- ou une différence considérée comme négligeable entre deux vecteurs de phase ( ${φ}_{0}^{k - 1} , {φ}_{0}^{k}$) consécutifs, comportant respectivement les phases des pixels de l'image de l'échantillon, dans le plan de détection, au cours de deux itérations consécutives.

8. Procédé selon la revendication 7, dans lequel la sous-étape iii), comporte :
- pour différents pixels (*x, y*)*,* le calcul d'une grandeur (*ε^{k}*(*x, y*)) associée à chaque pixel, en fonction de la valeur de l'image complexe ( ${A}_{z}^{k}$) déterminée lors de la sous-étape ii) audit pixel, ou d'une dérivée dimensionnelle de ladite image complexe audit pixel ;
- la combinaison des grandeurs (*ε^{k}*(*x, y*)) associées en différents pixels (*x, y*), de façon à obtenir l'indicateur de bruit (*ε^{k}*).

9. Procédé selon la revendication 8 dans lequel l'indicateur de bruit (*ε^{k}*) est une norme d'ordre inférieur ou égal à 1 calculée à partir des grandeurs *ε^{k}*(*x, y*) associées à chaque pixel.

10. Procédé selon l'une quelconque des revendications 8 ou 9, dans lequel lors de la sous-étape iii), la grandeur (*ε^{k}*(*x, y))* associée à chaque pixel (*x, y*) est calculée à partir du module d'une dérivée dimensionnelle, audit pixel, de l'image complexe ( ${A}_{z}^{k}$) déterminée lors de la sous-étape ii).

11. Procédé selon l'une quelconque des revendications 8ou 9 dans lequel :
- lors de la sous-étape i), l'image initiale de l'échantillon ( ${A}_{0}^{k = 1}$) est définie par une normalisation de l'image (*I*₀) acquise par le capteur d'image (16) par une image (*I*₁₂) représentative de l'onde lumineuse (12) émise par la source de lumière ;
- lors de la sous-étape iii), la grandeur (*ε^{k}*(*x, y))* associée à chaque pixel est calculée en fonction de la valeur de l'image complexe ( ${A}_{z}^{k}$) déterminée lors de la sous-étape ii), audit pixel, soustraite d'un nombre strictement positif, notamment le nombre 1.

12. Procédé selon l'une quelconque des revendications 7 à 11, dans lequel lors de la sous-étape iv), l'ajustement de la valeur de la phase de chaque pixel est réalisé en constituant un vecteur, dit vecteur de phase ( ${φ}_{0}^{k}$)*,* dont chaque terme correspond à la valeur de la phase ( ${φ}_{0}^{k} \left(x, y\right)$) d'un pixel de l'image de l'échantillon dans le plan de détection (*P*₀), ce vecteur étant mis à jour, au cours de chaque itération, de façon soit à minimiser, soit à maximiser l'indicateur de bruit (*ε^{k}*) calculé lors de la sous-étape iii), en se basant sur un gradient (∇*ε^{k}*) de l'indicateur de bruit (*ε^{k}*) selon chaque terme dudit vecteur de phase.

13. Procédé selon l'une quelconque des revendications précédentes, dans lequel la particule est choisie parmi : une cellule, un microorganisme, une microbille, un exosome, une goutelette d'une émulsion, un noyau cellulaire, un débris cellulaire.

14. Procédé selon l'une quelconque des revendications précédentes, dans lequel la caractérisation est :
- une classification de la particule parmi une pluralité de classes de particules prédéterminées ;
- ou une détermination d'un état de la particule, parmi une pluralité d'états prédéterminés ;
- ou une estimation d'un paramètre géométrique de la particule ;
- ou une estimation d'un paramètre optique de la particule.

15. Dispositif pour la caractérisation d'une particule contenue dans un échantillon, le dispositif comportant :
- une source de lumière (11) apte à émettre une onde lumineuse incidente (12) se propageant vers l'échantillon (10) ;
- un capteur d'image (16) ;
- un support (10s), configuré pour maintenir l'échantillon (10) entre ladite source de lumière (11) et le capteur d'image (16) ;
- un processeur (20), configuré pour recevoir une image de l'échantillon acquise par le capteur d'image (16) et à mettre en œuvre les étapes c) à f) du procédé objet de l'une quelconque des revendications 1 à 14.

## Patentansprüche

1. Verfahren zur Charakterisierung eines in einer Probe (10) enthaltenen Partikels (10b), umfassend die folgenden Schritte:
a) Beleuchten der Probe mithilfe einer Lichtquelle (11), wobei die Lichtquelle eine einfallende Lichtwelle (12) aussendet, die sich entlang einer Ausbreitungsachse (Z) zu der Probe (10) hin ausbreitet;
b) Erfassen, mithilfe eines Bildsensors (16), eines Bildes (I₀) der Probe (10), das in einer Detektionsebene (P₀) gebildet wird, wobei die Probe zwischen der Lichtquelle (11) und dem Bildsensor (16) angeordnet ist, wobei das Bild für eine Lichtwelle (22) repräsentativ ist, die unter der Wirkung der Beleuchtung von der Probe durchgelassen wird, wobei das erfasste Bild Interferenzmuster zwischen einer aus der einfallenden Lichtwelle (12) resultierenden Komponente, die von der Probe nicht absorbiert wird, und einer aus der Beugung der einfallenden Lichtwelle (12) durch die Probe resultierenden Komponente umfasst, wobei das Verfahren auch die folgenden Schritte umfasst:
c) Anwenden eines Ausbreitungsoperators (h) auf das im Schritt b) erfasste Bild (I₀), so dass ein komplexes Bild (A_{ref}), Referenzbild genannt, das für die Probe repräsentativ ist, in einer Rekonstruktionsebene (P_{z}, P₀) berechnet wird;
d) Auswählen einer radialen Position (x, y) des Partikels in einer Ebene parallel zu der Detektionsebene (P₀);
e) ausgehend von dem im Schritt c) berechneten komplexen Referenzbild (A_{ref}), Bestimmen mindestens einer charakteristischen Größe (M, φ, k) der Phase und/oder der Amplitude der von der Probe durchgelassenen Lichtwelle (22), und dies an der im Schritt d) ausgewählten radialen Position und in einer Mehrzahl von Abständen von der Detektionsebene (P₀) oder von der Rekonstruktionsebene (P_{z}), wobei der Schritt e) Folgendes umfasst:
• das Anwenden eines Ausbreitungsoperators (h) auf das komplexe Referenzbild (A_{ref}), so dass sogenannte sekundäre komplexe Bilder (A_{ref,z}) für eine Mehrzahl von Abständen von der Rekonstruktionsebene (P_{Z}) oder von der Detektionsebene (P₀) berechnet werden;
• das Bestimmen mindestens einer charakteristischen Größe der von der Probe (10) in jedem dieser Abstände durchgelassenen Lichtwelle (22) ausgehend von den sekundären komplexen Bildern (A_{ref,z});
f) Bilden eines Profils, das den Verlauf der im Schritt
e) bestimmten charakteristischen Größe entlang einer Achse repräsentiert, die parallel zu der Ausbreitungsachse (Z) und durch die im Schritt d) ausgewählte radiale Position (x, y) verläuft;
g) **gekennzeichnet durch** eine Charakterisierung des Partikels in Abhängigkeit von dem im Schritt f gebildeten Profil, wobei die Charakterisierung:
- einen Vergleich oder eine Klassifizierung des im Schritt f) gebildeten Profils auf der Basis von Standardprofilen, die während einer Lernphase gebildet wurden, umfasst;
- oder auf einer Metrik basiert, die einen Vergleich zwischen dem im Schritt f) gebildeten Profil und den während einer Lernphase gebildeten Standardprofilen ermöglicht.

2. Verfahren nach Anspruch 1, wobei jede charakteristische Größe ausgehend von dem Modul oder dem Argument eines sekundären komplexen Bildes (A_{ref,z}) bestimmt wird.

3. Verfahren nach einem der vorhergehenden Ansprüche, wobei die Charakterisierung auf einer Metrik basiert, die eine Klassifizierung des im Schritt f) erhaltenen Profils nach Klassen, die den Standardprofilen zugeordnet sind, ermöglicht.

4. Verfahren nach einem der Ansprüche 1 bis 3, wobei im Schritt d) die radiale Position jedes Partikels (x, y) mithilfe des im Schritt b) erfassten Bildes (I₀) oder mithilfe des im Schritt c) berechneten komplexen Referenzbildes (A_{ref,z}) ausgewählt wird.

5. Verfahren nach einem der vorhergehenden Ansprüche, wobei keine Vergrößerungsoptik zwischen der Probe (10) und dem Bildsensor (16) angeordnet ist.

6. Verfahren nach einem der vorhergehenden Ansprüche, wobei:
- der Schritt d) ein Auswählen einer Mehrzahl von Radialkoordinaten, die für ein selbes Partikel repräsentativ sind, umfasst;
- der Schritt f) ein Bilden einer Mehrzahl von Profilen, elementare Profile genannt, an jeder ausgewählten Radialkoordinate und das Kombinieren der Profile umfasst, so dass ein für das Partikel repräsentatives Profil gebildet wird.

7. Verfahren nach einem der vorhergehenden Ansprüche, wobei im Schritt c) das Berechnen des komplexen Referenzbildes die folgenden Teilschritte umfasst:
i) Definieren eines Ausgangsbildes der Probe ( ${A}_{0}^{k = 0}$) in der Detektionsebene ausgehend von dem von dem Bildsensor erfassten Bild (I₀);
ii) Bestimmen eines komplexen Bildes der Probe ( ${A}_{z}^{k}$) in einer Rekonstruktionsebene (P_{Z}), indem ein Ausbreitungsoperator auf das im Teilschritt i) definierte Ausgangsbild der Probe ( ${A}_{0}^{k = 1}$) oder auf das aus der vorherigen Iteration (k - 1) resultierende Bild der Probe ( ${A}_{0}^{k - 1}$), in der Detektionsebene, angewendet wird;
iii) Berechnen eines Rauschindikators (ε^{k}) ausgehend von dem im Teilschritt ii) bestimmten komplexen Bild ( ${A}_{z}^{k}$), wobei dieser Rauschindikator von einem Rekonstruktionsrauschen, mit dem das komplexe Bild ( ${A}_{z}^{k}$ ) behaftet ist, abhängt;
iv) Aktualisieren des Bildes der Probe ( ${A}_{0}^{k}$) in der Detektionsebene (P₀) durch ein Anpassen von Phasenwerten ( ${φ}_{0}^{k} \left(x, y\right)$) der Pixel des Bildes, wobei das Anpassen in Abhängigkeit von einer Variation des bei dem Teilschritt iii) berechneten Indikators gemäß den Phasenwerten vorgenommen wird, so dass der Rauschindikator minimiert wird;
v) Reiteration der Teilschritte ii) bis iv) bis zum Erreichen eines Konvergenzkriteriums, so dass ein komplexes Referenzbild der Probe (10) in der Detektionsebene (P₀) oder in der Rekonstruktionsebene (P_{Z}) erhalten wird, wobei das Konvergenzkriterium
- eine vorbestimmte Anzahl von Iterationen ist;
- oder ein Mindestwert eines Gradienten (∇ε^{k}) des Rauschindikators ist;
- oder eine als vernachlässigbar betrachtete Differenz zwischen zwei aufeinander folgenden Phasenvektoren ( ${φ}_{0}^{k - 1} , {φ}_{0}^{k}$) ist, die jeweils die Phasen der Pixel des Bildes der Probe, in der Detektionsebene, während zwei aufeinander folgenden Iterationen umfassen.

8. Verfahren nach Anspruch 7, wobei der Teilschritt iii) umfasst:
- für verschiedene Pixel (x, y) das Berechnen einer jedem Pixel zugeordneten Größe (ε^{k}(x, y)) in Abhängigkeit von dem Wert des komplexen Bildes ( ${A}_{z}^{k}$), das im Teilschritt ii) an dem Pixel bestimmt wurde, oder einer dimensionalen Ableitung des komplexen Bildes an dem Pixel;
- das Kombinieren der Größen (ε^{k}(x, y)), die verschiedenen Pixeln (x, y) zugeordnet sind, so dass der Rauschindikator (ε^{k}) erhalten wird.

9. Verfahren nach Anspruch 8, wobei der Rauschindikator (ε^{k}) eine Norm der Ordnung kleiner oder gleich 1 ist, die ausgehend von den Größen ε^{k}(x, y) berechnet wird, die jedem Pixel zugeordnet sind.

10. Verfahren nach einem der Ansprüche 8 oder 9, wobei im Teilschritt iii) die jedem Pixel (x, y) zugeordnete Größe (ε^{k}(x, y)) ausgehend von dem Modul einer dimensionalen Ableitung, an dem Pixel, des im Teilschritt ii) bestimmten komplexen Bildes ( ${A}_{z}^{k}$) berechnet wird.

11. Verfahren nach einem der Ansprüche 8 oder 9, wobei:
- im Teilschritt i) das Ausgangsbild der Probe ( ${A}_{0}^{k = 1}$) durch eine Normalisierung des von dem Bildsensor (16) erfassten Bildes (I₀) durch ein Bild (I₁₂), das für die von der Lichtquelle ausgesendete Lichtwelle (12) repräsentativ ist, definiert wird;
- im Teilschritt iii) die Größe (ε^{k}(x, y)), die jedem Pixel zugeordnet ist, in Abhängigkeit von dem Wert des komplexen Bildes ( ${A}_{z}^{k}$), das im Teilschritt ii) bestimmt wurde, an dem Pixel berechnet wird, subtrahiert von einer strikt positiven Zahl, insbesondere der Zahl 1.

12. Verfahren nach einem der Ansprüche 7 bis 11, bei dem im Teilschritt iv) das Anpassen des Werts der Phase jedes Pixels ausgeführt wird, indem ein Vektor, Phasenvektor ( ${φ}_{0}^{k}$) genannt, gebildet wird, von dem jeder Term dem Wert der Phase ( ${φ}_{0}^{k} \left(x, y\right)$) eines Pixels des Bildes der Probe in der Detektionsebene (P₀) entspricht, wobei dieser Vektor während jeder Iteration aktualisiert wird, so dass der im Teilschritt iii) berechnete Rauschindikator (ε^{k}) entweder minimiert oder maximiert wird, wobei ein Gradient (∇ε^{k}) des Rauschindikators (ε^{k}) gemäß jedem Term des Phasenvektors zugrunde gelegt wird.

13. Verfahren nach einem der vorhergehenden Ansprüche, wobei das Partikel gewählt ist aus: einer Zelle, einem Mikroorganismus, einer Mikrokugel, einem Exosom, einem Tröpfchen einer Emulsion, einem Zellkern, einem Zellabfall.

14. Verfahren nach einem der vorhergehenden Ansprüche, wobei die Charakterisierung:
- eine Klassifizierung des Partikels in eine Mehrzahl von vorbestimmten Partikelklassen ist;
- oder eine Bestimmung eines Zustands des Partikels unter einer Mehrzahl von vorbestimmten Zuständen ist;
- oder eine Schätzung eines geometrischen Parameters des Partikels ist;
- oder eine Schätzung eines optischen Parameters des Partikels ist.

15. Vorrichtung zur Charakterisierung eines in einer Probe enthaltenen Partikels, die Vorrichtung umfassend:
- eine Lichtquelle (11) die geeignet ist, eine einfallende Lichtwelle (12) auszusenden, die sich zu der Probe (10) hin ausbreitet;
- einen Bildsensor (16);
- einen Träger (10s), der dazu ausgestaltet ist, die Probe (10) zwischen der Lichtquelle (11) und dem Bildsensor (16) zu halten;
- einen Prozessor (20), der dazu ausgestaltet ist, ein von dem Bildsensor (16) erfasstes Bild der Probe zu empfangen und die Schritte c) bis f) des Verfahrens nach einem der Ansprüche 1 bis 14 durchzuführen.

## Claims

1. A method for characterizing a particle (10b) contained in a sample (10), the method including the following steps:
a) illuminating said sample using a light source (11), the light source emitting an incident light wave (12) propagating towards the sample (10) along a propagation axis (Z);
b) acquiring, using an image sensor (16), an image (*I*₀) of the sample (10), formed in a detection plane (*P*₀), the sample being positioned between the light source (11) and the image sensor (16), the image being representative of a light wave (22) transmitted by the sample under the effect of said illumination, wherein the acquired image comprises interference patterns between a component resulting from the incident light wave (12) not absorbed by the sample and a component resulting from the diffraction of the incident light wave (12) by the sample;
the method also comprising the following steps:
c) applying a propagation operator (h) to the image acquired (*I*₀) in step b), so as to calculate a complex image (*A_{ref}*), referred to as a reference image, representative of the sample in a reconstruction plane (*P_{z}*, *P*₀);
d) selecting a radial position (*x, y*) of said particle in a plane parallel to the detection plane (*P*₀);
e) from the reference complex image (*A_{ref}*) calculated in step c), determining at least one characteristic quantity (*M, φ, k*) of the phase or of the amplitude of the light wave (22) transmitted by the sample, at the radial position selected during step d), and this at a plurality of distances from the detection plane (*P*₀) or from the reconstruction plane (*P_{z}*), step e) including:
▪ applying a propagation operator (h) to the reference complex image (*A_{ref}*), so as to calculate what are called secondary complex images (*A_{ref,z}*) for a plurality of distances from the reconstruction plane (*P_{Z}*) or from the detection plane (*P*₀);
▪ determining at least one characteristic quantity of the light wave (22) transmitted by the sample (10) at each of said distances, from the secondary complex images (*A_{ref,z}*);
f) forming a profile representing the variation in the characteristic quantity determined in step e) along an axis parallel to the propagation axis (Z) and passing through the radial position (*x, y*) selected in step d);
g) **characterized in** a characterization of the particle depending on the profile formed in step f), the characterization :
- comprising comparing or classifying the profile formed in step f) based on standard profiles obtained in a learning phase ;
- being based on a metric allowing a comparison between the profile formed in step d) and standard profiles obtained in a learning phase.

2. The method as claimed in claim 1, wherein each characteristic quantity is determined from the modulus or the argument of a secondary complex expression (*A_{ref,z}*).

3. The method as claimed in any one of the preceding claims, wherein the characterization is based on a metric allowing a classification of the profile according obtained in step f) into classes associated with standard profiles.

4. The method as claimed in any one of claims 1 to 3, wherein, in step d), the radial position of each particle (*x, y*) is selected using the image acquired (*I*₀) in step b) or using the reference complex image (*A_{ref,z}*) calculated in step c).

5. The method as claimed in any one of the preceding claims, wherein no magnifying optics are placed between the sample (10) and the image sensor (16).

6. The method as claimed in any one of the preceding claims, wherein:
- step d) includes selecting a plurality of radial coordinates that are representative of one and the same particle;
- step f) includes forming a plurality of profiles, referred to as elementary profiles, at each selected radial coordinate, and combining said profiles so as to form a profile representative of said particle.

7. The method according to any one of the preceding claims, wherein, in step c), the calculation of the reference complex image includes the following substeps:
i) defining an initial image of the sample ( ${A}_{0}^{k = 0}$) in the detection plane, from the image (*I*₀) acquired by the image sensor;
ii) determining a complex image of the sample ( ${A}_{z}^{k}$) in a reconstruction plane (*P_{z}*) by applying a propagation operator to the initial image of the sample ( ${A}_{0}^{k = 1}$) defined in substep i) or to the image of the sample ( ${A}_{0}^{k - 1}$) in the detection plane resulting from the preceding iteration (*k* - 1);
iii) calculating a noise indicator (*ε^{k}*) from the complex image ( ${A}_{z}^{k}$) determined in substep ii), this noise indicator depending on a reconstruction noise affecting said complex image ( ${A}_{z}^{k}$);
iv) updating the image of the sample ( ${A}_{0}^{k}$) in the detection plane(*P*₀) by adjusting phase values ( ${φ}_{0}^{k} \left(x, y\right)$) of the pixels of said image, the adjustment being carried out according to a variation in the indicator calculated in substep iii) according to said phase values;
v) reiterating substeps ii) to iv) until a convergence criterion is reached, in such a way as to obtain a complex reference image of the sample (10) in the detection plane (*P*₀), or in the reconstruction plane (*P_{z}*).

8. The method as claimed in claim 7, wherein substep iii) includes:
- for various pixels (*x*, *y*), calculating a quantity (*ε^{k}*(*x*, *y*)) associated with each pixel, according to the value of the complex image ( ${A}_{z}^{k}$) determined in substep ii) for said pixel, or of a dimensional derivative of said complex image image for said pixel;
- combining the quantities (*ε^{k}*(*x*, *y*)) associated with various pixels (*x*, *y*), so as to obtain the noise indicator (*ε^{k}*).

9. The method as claimed in claim 8, wherein the noise indicator (*ε^{k}*) is a norm of order lower than or equal to 1 calculated from the quantities (*ε^{k}*(*x*, *y*) associated with each pixel.

10. The method as claimed in either of claims 8 and 9, wherein, in substep iii), the quantity (*ε^{k}*(*x*, y)) associated with each pixel (*x*, *y*) is calculated from the modulus of a dimensional derivative, for said pixel, of the complex image ( ${A}_{z}^{k}$) determined in substep ii).

11. The method as claimed in either of claims 8 and 9, wherein:
- in substep i), the initial image of the sample ( ${A}_{0}^{k = 1}$) is defined by a normalization of the image (*I*₀) acquired by the image sensor (16) by an image (*I*₁₂) representative of the light wave (12) emitted by the light source;
- in substep iii), the quantity (*ε^{k}*(*x*, *y*)) associated with each pixel is calculated according to the value of the complex image ( ${A}_{z}^{k}$) determined in substep ii), for said pixel, subtracted from a strictly positive number, in particular the number 1.

12. The method as claimed in any one of claims 7 to 11, wherein, in substep iv), the value of the phase of each pixel is adjusted by forming a vector, referred to as the phase vector ( ${φ}_{0}^{k}$), each term of which corresponds to the value of the phase ( ${φ}_{0}^{k} \left(x, y\right)$) of a pixel of the image of the sample in the detection plane (*P*₀), this vector being updated, in each iteration, so as to minimize or to maximize the noise indicator (*ε^{k}*) calculated in substep iii), on the basis of a gradient (∇*ε^{k}*) of the noise indicator (*ε^{k}*) according to each term of said phase vector.

13. The method as claimed in any one of the preceding claims, wherein the particle is chosen from: a cell, a microorganism, a microbead, an exosome, a droplet of an emulsion, a cell nucleus or a piece of cellular debris.

14. The method as claimed in any one of the preceding claims, wherein the characterization is:
- a classification of the particle according to a plurality of predetermined particle classes;
- or a determination of a state of the particle, according to a plurality of predetermined states;
- or an estimation of a geometric parameter of the particle;
- or an estimation of an optical parameter of the particle.

15. A device for characterizing a particle contained in a sample, the device including:
- a light source (11) capable of emitting an incident light wave (12) propagating towards the sample (10);
- an image sensor (16);
- a holder (10s), configured to hold the sample (10) between said light source (11) and the image sensor (16);
- a processor (20), configured to receive an image of the sample acquired by the image sensor (16) and to implement steps c) to f) of the method that is the subject matter of any one of claims 1 to 14.
